# EUROPÄISCHE PATENTANMELDUNG

(11) **EP 4 711 654 A1**
(43) Veröffentlichungstag der Anmeldung: **18.03.2026**
(21) Anmeldenummer: 25200877.6
(22) Anmeldetag: 08.09.2025
(51) Int. Cl.: F16K 3/24, F16K 5/04, F16K 11/20, F16K 11/085

(54) **VENTILVORRICHTUNG, THERMOMANAGEMENTSYSTEM, VERWENDUNG UND VERFAHREN**

(30) Priorität: 13.09.2024 DE 102024126526
(71) Anmelder: BTT Solutions GER GmbH, 70806 Kornwestheim (DE)
(72) Erfinder: Hiller, Bert, 71384 Weinstadt (DE); Mißkam, Thomas, 71735 Eberdingen (DE)
(74) Vertreter: Michalski Hüttermann & Partner Patentanwälte mbB

(57) **Zusammenfassung**

Die vorliegende Erfindung betrifft eine Ventilvorrichtung (10) für eine Fluidströmung, aufweisend
ein Gehäuse (20) mit einer von einer Innenfläche (25) des Gehäuses (20) begrenzten Fluidkammer (30) und mit an die Fluidkammer (30) angeschlossenen zumindest zwei Anschlüssen (21, 22, 23, 24),
einen in der Fluidkammer (30) drehbar um eine Drehachse (X) angeordneten Schieber (50), der die Fluidkammer (30) in zumindest zwei Fluidbereiche (B1, B2) teilt und zur Abdichtung der Fluidbereiche (B1, B2) zueinander zumindest abschnittsweise an der Innenfläche (25) anliegt, und
einen zumindest teilweise in der Fluidkammer (30) angeordneten Aktuationsmechanismus (80) zum Drehen des Schiebers (50).

## Beschreibung

Die Erfindung betrifft eine Ventilvorrichtung bzw. ein Ventil oder Schaltventil für eine Fluidströmung. Weiter betrifft die Erfindung ein Thermomanagementsystem mit einer Ventilvorrichtung, eine Verwendung einer Ventilvorrichtung, und ein Verfahren mit einer Ventilvorrichtung.

Beispielsweise werden Fluidströmungen verwendet, um Komponenten zu temperieren. Temperieren kann Heizen und/oder Kühlen umfassen. Die meist flüssigen Fluidströmungen dienen dabei als Wärmeträger. Durch Schalten bzw. Mischen der Fluidströmungen mittels einer Ventilvorrichtung kann das Temperieren gesteuert oder geregelt werden. Beispielsweise können Fluidströmungen mit unterschiedlichen Temperaturen gemischt werden, um eine bestimmte Temperatur der gemischten Fluidströmung zu erreichen, die für das Temperieren erforderlich ist. Es ist auch möglich, mit Ventilvorrichtungen Fluidströmungen an- oder abzuschalten.

Nachteilig an gängigen Ventilvorrichtungen ist ein träges Ansprechverhalten, eine kurze Lebensdauer und eine unzufriedenstellende Genauigkeit, insbesondere bei flüssigen Fluidströmungen. Weiter sind viele Ventilvorrichtungen teuer in der Herstellung. Auch ist die Flexibilität in der Verwendung für verschiedene Einsatzzwecke verbesserungsbedürftig. Es ist eine Aufgabe der Erfindung, Lösungen anzugeben, um die vorgenannten Nachteile zu reduzieren oder zu vermeiden. Insbesondere ist es eine Aufgabe, konstruktive Vereinfachungen und Funktionserweiterungen anzugeben.

Die vorgenannte Aufgabe wird gelöst durch die in den unabhängigen Ansprüchen angegebenen Merkmale. Vorteilhafte Ausgestaltungen der Erfindung sind in der Beschreibung, in den abhängigen Ansprüchen und in den Zeichnungen angegeben.

Vorgeschlagen wird eine Ventilvorrichtung für eine Fluidströmung. Die Ventilvorrichtung ist beispielsweise zum Schalten und/oder Mischen von einer oder mehreren, beispielsweise flüssigen, Fluidströmung(en) zwischen zumindest zwei Anschlüssen, insbesondere drei, vier oder mehr Anschlüssen, eingerichtet. Die Ventilvorrichtung weist vorschlagsgemäß auf
ein Gehäuse mit einer von einer Innenfläche des Gehäuses begrenzten Fluidkammer und mit (den) an die Fluidkammer angeschlossenen zumindest zwei Anschlüssen,
einen in der Fluidkammer drehbar um eine Drehachse angeordneten Schieber, der die Fluidkammer in zumindest zwei Fluidbereiche teilt und zur Abdichtung der Fluidbereiche zueinander zumindest abschnittsweise an der Innenfläche anliegt; und insbesondere
einen zumindest teilweise in der Fluidkammer angeordneten Aktuationsmechanismus zum Drehen des Schiebers.

Die Ventilvorrichtung bzw. das Ventil ist insbesondere zum Schalten, Mischen, Drosseln und/oder Umlenken von Fluidströmungen zwischen zwei oder mehr Anschlüssen eingerichtet. Die Ventilvorrichtung kann einen Durchfluss einer Fluidströmung regulieren, insbesondere in Abhängigkeit von einer Drehstellung des Schiebers. Die Ventilvorrichtung weist das Gehäuse, den Schieber und den Aktuationsmechanismus auf. Insbesondere ist vorgesehen, dass das Gehäuse die Fluidkammer und zumindest eine Innenfläche aufweist, dass die Fluidkammer von der Innenfläche begrenzt ist, dass das Gehäuse zumindest zwei Anschlüsse aufweist, dass die zumindest zwei Anschlüsse an die Fluidkammer angeschlossen sind, dass der der Schieber drehbar um eine Drehachse in der Fluidkammer angeordnet ist, dass der Schieber die Fluidkammer in zumindest zwei Fluidbereiche teilt, dass der Schieber zur Abdichtung der Fluidbereiche zueinander zumindest abschnittsweise an der Innenfläche anliegt, und/oder dass der Aktuationsmechanismus zumindest teilweise oder vollständig in der Fluidkammer angeordnet ist.

In anderen Worten, beispielsweise, wird mit der vorgeschlagenen Ventilvorrichtung ein Ventil bzw. Schaltventil für Fluide oder Flüssigkeiten, z.B. Kühlflüssigkeit, vorgesehen, das zwei oder mehr Anschlussmöglichkeiten an eine Mischkammer aufweist, und das ein Stellelement in der Mischkammer aufweist. Das Stellelement teilt die Mischkammer auf und kann durch einen teilweise oder ganz in die Mischkammer integrierten Mechanismus rotiert werden, um zwischen den Anschlussmöglichkeiten zu schalten bzw. zu mischen. Das Stellelement dichtet durch zumindest bereichsweises Anliegen in der Mischkammer ab, beispielsweise um Leckage innerhalb der Mischkammer zu verringern oder vermeiden.

Die Ventilvorrichtung zeichnet sich durch eine Reihe von Vorteilen aus, die sich insbesondere durch vorliegend beschriebene und in den abhängigen Ansprüchen enthaltene optionale Merkmale weiter verstärken lassen.

Die Ventilvorrichtung zeichnet sich durch ein schnelles, direktes und präzises bzw. genaues Ansprechverhalten bei dennoch einfacher Konstruktion an. Eine Drehung des Schiebers kann direkt den Verlauf von Fluidströmungen beeinflussen. Aufgrund von der Abdichtung des Schiebers an der Innenfläche wird eine Leckage reduziert oder auch vermieden, so dass die Ventilvorrichtung zuverlässig auch bei unterschiedlich hohen statischen Drücken in Fluidströmungen oder Strömungsgeschwindigkeiten durch die Fluidkammer möglichst geringe fluidische Reibungsverluste bzw. unerwünschte Vermischungen von Fluidströmungen erreicht werden können. Dadurch, dass der Aktuationsmechanismus teilweise oder ganz in der Fluidkammer angeordnet ist, kann die Ventilvorrichtung weiter sehr kompakt ausgestaltet werden. Zudem kann die Temperatur von Fluidströmungen sehr direkt am Aktuationsmechanismus bzw. in der Fluidkammer erfasst werden. Es ist auch möglich, die Fluidströmung selbst als Schmiermittel für bewegliche Komponenten des Aktuationsmechanismus zu verwenden.

Weiter schafft die Erfindung dadurch Variabilität bzw. Flexibilität, dass ein Schaltverhalten bzw. Mischverhalten o.ä. flexibel durch Anpassungen am Schieber variiert werden kann. Das Schaltverhalten betrifft die Frage, wie die Anschlüsse miteinander in Abhängigkeit von der Drehung des Schiebers verbunden werden bzw. ob und auf welche Weise ein Anschluss verschlossen wird. Die Ventilvorrichtung kann zum Aufteilen, zum Drosseln, zum Mischen, zum Schalten, als Bypass und dergleichen flexibel verwendet werden, insbesondere durch variable Ausgestaltung des Schiebers. Beispielsweise können verschiedene Technologien für Aktuationsmechanismen implementiert werden. Der Aktuationsmechanismus kann teilweise außerhalb von der Fluidkammer zugänglich sein, um den Schieber von dort z.B. händisch oder motorisiert drehen zu können. Es können mittels Stellmotor und/oder mittels Thermostat bzw. Dehnstoffelement angesteuerte Lösungen implementiert werden.

Die Erfindung schafft weiter eine skalierbare Lösung. Durch Veränderung von Dimensionen bzw. Abmaßen der Ventilvorrichtung kann eine Leistungsklasse der Ventilvorrichtung festgelegt bzw. verändert werden. Beispielsweise können einfach größere Anschlüsse für größere Volumenströme vorgesehen werden. Das senkt die Kosten, da ein geringerer Aufwand für Neuentwicklungen anfallen kann.

Die Ventilvorrichtung ist für eine Fluidströmung vorgesehen bzw. eingerichtet. Das bedeutet, dass sich die Ventilvorrichtung beispielsweise dazu eignet, eine Fluidströmung zu handhaben. Die Ventilvorrichtung kann im Zusammenhang mit einer Fluidströmung verwendet werden und ist beispielsweise zum Führen der Fluidströmung geeignet, beispielsweise ist die Ventilvorrichtung, typischerweise mit Ausnahme der Anschlüsse, flüssigkeitsdicht ausgeführt. Die Ventilvorrichtung kann als Ventil, insbesondere Schalt- und/oder Mischventil, ausgebildet sein.

Die Ventilvorrichtung ist insbesondere zum Schalten einer Fluidströmung bzw. von Fluidströmungen und/oder Mischen von Fluidströmungen zwischen den zumindest Anschlüssen, beispielsweise zwischen zwei, drei, vier oder mehr Anschlüssen, eingerichtet. Die Ventilvorrichtung kann zwischen den Anschlüssen schalten. Alternativ oder ergänzend kann die Ventilvorrichtung zwischen den Anschlüssen mischen. "Schalten" einer Fluidströmung oder mehrerer Fluidströmungen impliziert "Einschalten" bzw. "Ausschalten" und ggf. "Drosseln" bzw. Zwischenstufen davon, also "offen", "geschlossen" und ggf. "halb-offen" oder andere ÖffnungsStellungen der Ventilvorrichtung an einem Anschluss, zwischen zwei Anschlüssen oder zwischen mehr als zwei Anschlüssen. Schalten impliziert weiter ein Wechseln einer fluidischen Verschaltung der Anschlüsse, z.B. um die Fluidströmung umzulenken. "Mischen" von Fluidströmungen bedeutet beispielsweise, dass zwei oder mehr Fluidströmungen miteinander gemischt werden, wobei beispielsweise von einer Fluidströmung ein Teil abgezweigt und zu einer anderen Fluidströmung beigemischt wird oder wobei eine Fluidströmung einer anderen Fluidströmung teilweise oder vollständig zugemischt wird. Mischen kann auch Umlenken einer Fluidströmung beinhalten.

Das Gehäuse weist eine Fluidkammer auf, die typischerweise durch eine oder mehrere Innenflächen begrenzt ist. Die Fluidkammer kann die Fluidströmungen führen. Die Fluidkammer ist in ihrer Form insbesondere zumindest im Wesentlichen durch die Innenfläche(n) definiert. Die Innenfläche kann als innenliegende bzw. innenseitige Oberfläche des Gehäuses verstanden werden. Beispielsweise ist die Innenfläche abgewandt von einer Außenfläche des Gehäuses angeordnet. Die Fluidkammer ist beispielsweise ein Hohlraum, in den die Anschlüsse, insbesondere nur die Anschlüsse, münden.

Das Gehäuse weist die zumindest zwei Anschlüsse auf, beispielsweise einen ersten Anschluss und einen zweiten Anschluss, optional einen dritten Anschluss, optional einen vierten Anschluss, etc. Ein Anschluss weist beispielsweise eine Anschlussmöglichkeit, z.B. einen Stutzen, auf. Ein Anschluss grenzt typischerweise an die Fluidkammer an bzw. ist fluidisch damit verbunden, um eine Fluidströmung in die Fluidkammer zu leiten bzw. von der Fluidkammer zu empfangen. Ein Anschluss bildet einen Übergabepunkt für Fluidströmungen. Beispielsweise weist die Innenfläche je Anschluss der zumindest zwei Anschlüsse eine Öffnung bzw. Ausnehmung auf. Die Öffnung ist vorzugsweise zumindest im Wesentlichen rund. Ein zur Öffnung führender Kanal in einem Anschluss ist typischerweise vorgesehen, der beispielsweise rund bzw. zylindrisch geformt sein kann.

Beispielsweise kann ein Anschluss männlich oder weiblich ausgebildet sein. Ein männlicher Anschluss kann einen weiblichen Anschluss aufnehmen, um eine fluidleitende Verbindung herzustellen, die leicht lösbar sein kann. Ein Anschluss kann eine Dichtung aufweisen, um in einem verbundenen Zustand abzudichten. Ein Anschluss kann ein Verbindungsmittel, z.B. eine Klammer und/oder ein Klips, aufweisen, das einen lösbaren Formschluss im verbundenen Zustand herstellen kann.

Der Schieber bzw. Drehschieber kann in der Fluidkammer bewegt werden, genauer gesagt um die Drehachse rotiert bzw. gedreht werden. Vorzugsweise ist der Schieber, wenigstens abschnittsweise, als Klappe ausgebildet. Der Schieber kann alternativ oder ergänzend als Küken ausgebildet sein. Der Schieber ist typischerweise drehbar gelagert. Beispielsweise kann der Schieber relativ zum Gehäuse insbesondere nur um eine Achse bzw. die Drehachse gedreht werden. Beispielsweise ist der Schieber auf einem Vorsprung bzw. einer Achse oder in einen Rücksprung eingreifend drehbar gelagert. Der Schieber ist als bewegliche Komponente zu verstehen, die beispielsweise einen oder mehrere in der Fluidkammer gebildete Durchgänge bzw. Fluidbereiche zwischen Anschlüssen öffnen oder schließen kann.

Insbesondere ist der Schieber vollständig in der Fluidkammer angeordnet, beispielsweise um möglichst wenige Verbindungen nach außen zu schaffen und ggf. die Dichtheit bzw. Langlebigkeit der Ventilvorrichtung zu erhöhen. Der Schieber kann durch vom Schieber separate Komponenten angetrieben sein, insbesondere den Aktuationsmechanismus und ggf. ein Rückstellelement, z.B. so dass für das Drehen des Schiebers selbst kein Abschnitt oder Teil des Schiebers außerhalb der Fluidkammer angeordnet sein muss.

Der Schieber liegt an der Innenfläche an, um in der Fluidkammer abzudichten bzw. die Fluidkammer möglichst dicht bzw. leckagefrei in die zumindest zwei Fluidbereiche oder auch drei oder vier oder mehr Fluidbereiche aufzuteilen. Dabei ist es so, dass ein bereichsweises Anliegen, beispielsweise in punkt-, linien-, oder flächenförmigem Kontakt, bereits eine Abdichtung zwischen den Fluidbereichen schafft, die vorteilhaft für die Effizienz beim Schalten bzw. Mischen ist. Nicht notwendigerweise ist eine völlig fluiddichte Abdichtung zwischen Schieber und Innenfläche vorgesehen. Es ist auch nicht notwendig, dass der Schieber zum Abdichten eine flexible Dichtung bzw. einen Dichtungsabschnitt aufweist. Es ist möglich, dass im wesentlichen harte Materialien, die bereichsweise aneinander anliegen, den vorgeschlagenen Zweck des Abdichtens der Fluidbereiche hinreichend erfüllen können, obwohl eine gewisse Leckage vorhanden ist. Die Fluidbereiche können zwischen den Anschlüssen des Gehäuses schaltbare Kanäle bereitstellen.

Der Schieber ist typischerweise zum Leiten bzw. Lenken von Fluid in der Fluidkammer vorgesehen. Vorzugsweise weist der Schieber einen insbesondere im Wesentlichen starren Basisabschnitt bzw. Wandungsabschnitt auf und optional einen gegenüber dem Wandungsabschnitt flexiblen Dichtungsabschnitt z.B. mit einer Dichtung und/oder Dichtlippe. Weiter kann der Schieber einen Lagerabschnitt aufweisen. Der Lagerabschnitt kann mit dem Wandungsabschnitt einstückig ausgebildet sein bzw. darin integriert sein. Der Lagerabschnitt kann zwischen zwei voneinander weg bzw. abgewandt weisenden Wandungsabschnitten angeordnet sein, insbesondere diese verbinden. Der Lagerabschnitt dient insbesondere zum Bereitstellen der Drehachse. Der Lagerabschnitt kann eine Aufnahme für einen Vorsprung bzw. für eine Achse aufweisen. Der Lagerabschnitt kann alternativ oder ergänzend einen Vorsprung, z.B. Lagerstift, zur Aufnahme durch das Gehäuse aufweisen. Der Lagerabschnitt kann sich zumindest im Wesentlichen parallel zur Erstreckung des Wandungsabschnitt erstrecken. Der Dichtungsabschnitt kann am Rand vom Wandungsabschnitt vorgesehen sein, insbesondere abschnittsweise umlaufend am jeweiligen Rand eines Wandungsabschnitts. Der Wandungsabschnitt und/oder der Dichtungsabschnitt kann eine oder mehrere Stirnflanken des Schiebers bereitstellen.

Insbesondere kann der Schieber bei seiner Bewegung zumindest bereichsweise an der Innenfläche, z.B. zumindest temporär oder dauerhaft, anliegen, beispielsweise beim Drehen die Innenfläche überstreichen. Der Schieber kann eine Dichtung aufweisen, die an der Innenflächen anliegt, beispielsweise eine Dichtlippe.

Die Fluidbereiche können auch als insbesondere im Wesentlichen fluiddicht zueinander abgegrenzte Teile der Fluidkammer verstanden werden. Die Fluidbereiche weisen typischerweise ein im Vergleich zueinander im Wesentlichen gleich großes Volumen auf, beispielsweise zueinander um maximal ±25%, maximal ±15%, maximal ±10%, maximal ±5% oder weniger unterschiedlich.

Der Aktuationsmechanismus ist zumindest teilweise in der Fluidkammer angeordnet. Der Aktuationsmechanismus ist dazu vorgesehen, um den Schieber zu drehen. Beispielsweise weist der Aktuationsmechanismus eine aktive und/oder motorische bzw. antreibende Komponente (z.B. ein Dehnstoffelement, ein Stellglied und/oder einen Aktuator) und/oder eine passive und/oder starre bzw. nichtmotorische Komponente (z.B. einen Hebel, eine Nocke und/oder ein Getriebe) auf, die zum Drehen verwendbar ist.

Es kann vorgesehen sein, dass die Innenfläche einen Innenflächenabschnitt oder mehrere Innenflächenabschnitte aufweist, beispielsweise einen ersten Innenflächenabschnitt und bevorzugt einen zweiten Innenflächenabschnitt und weiter bevorzugt einen dritten Innenflächenabschnitt. Ein Innenflächenabschnitt kann durch eine im Wesentlichen zusammenhängende Oberfläche gebildet sein, beispielsweise an einer bestimmten Seite in der Fluidkammer. Der erste Innenflächenabschnitt kann im Wesentlichen rund und/oder zylindrisch bzw. konkav um die Drehachse geformt sein. Ein Anschluss, zwei Anschlüsse, drei Anschlüsse, vier Anschlüsse oder alle Anschlüsse der zumindest zwei Anschlüsse können vom ersten Innenflächenabschnitt abgehen.

Der zweite Innenflächenabschnitt und der dritte Innenflächenabschnitt können einander zugewandt sein bzw. gegenüberliegend angeordnet sein. Beispielsweise können der zweite und der dritte Innenflächenabschnitt zumindest im Wesentlichen parallel zueinander angeordnet sein.

An den zweiten und den dritten Innenflächenabschnitt kann/können der Schieber und/oder der erste Innenflächenabschnitt angrenzen. Beispielsweise grenzt ein unterseitiger Rand des Schiebers an den zweiten Innenflächenabschnitt und/oder ein oberseitiger Rand des Schiebers an den dritten Innenflächenabschnitt.

Vorzugsweise ist zumindest einer der Anschlüsse angrenzend an den ersten Innenflächenabschnitt angeordnet und/oder von diesem bereichsweise gebildet bzw. geht von dem ersten Innenflächenabschnitt ab. Vorzugsweise sind zwei, drei, vier oder mehr oder alle der Anschlüsse angrenzend an den ersten Innenflächenabschnitt angeordnet bzw. gehen von diesem ab. Insoweit können Anschlüsse im Grunde quer zur Drehachse von der Fluidkammer abgehen und der Schieber stirnseitig mit Anschlüssen in Wechselwirkung treten bzw. vom Schieber stirnseitig überstrichen werden, was beispielsweise der Kompaktheit und der Präzision zuträglich sein kann. Dies sind bevorzugt durch Drehung des Schiebers geregelte Anschlüsse. Weitere Anschlüsse können frei positionierbar sein, beispielsweise am zweiten und/oder dritten Innenflächenabschnitt angeordnet sein. Es ist möglich, dass einer, zwei, drei, vier oder mehr oder alle der Anschlüsse angrenzend an den zweiten und/oder den dritten Innenflächenabschnitt angeordnet sind. Insoweit können Anschlüsse im Grunde längs der Drehachse von der Fluidkammer abgehen und der Schieber an einem seitlichen Rand bzw. ober- und/oder unterseitig mit Anschlüssen in Wechselwirkung treten.

Der erste und/oder der zweite Innenflächenabschnitt können durch ein erstes Gehäuseteil des Gehäuses bereitgestellt sein. Beispielsweise sind der erste und der zweite Innenflächenabschnitt durch ein einziges Gehäuseteil bereitgestellt. Das kann zuträglich für eine geringe Leckage und ein robustes Gehäuse sein.

Der dritte Innenflächenabschnitt kann durch ein zweites Gehäuseteil des Gehäuses bereitgestellt sein, beispielsweise in Form eines Deckels. Der dritte Innenflächenabschnitt kann alternativ oder ergänzend durch ein erstes bzw. das erste Gehäuseteil eines/des Gehäuses einer baugleichen Ventilvorrichtung bereitstellbar und/oder bereitgestellt sein. Es ist auch möglich, dass der erste Innenflächenabschnitt durch zwei Gehäuseteile jeweils anteilig bereitgestellt ist. Mehrere Gehäuseteile begünstigen die Möglichkeiten zur einfachen Reparatur und Wartung. Es ist auch möglich, so die Anzahl der Varianten an Ventilvorrichtungen durch Anpassung eines von mehreren Gehäuseteilen zu erhöhen, ohne dass eine vollständige Neukonstruktion erforderlich ist, was in wirtschaftlicher Weise die Flexibilität steigert.

Es kann vorgesehen sein, dass der Schieber an dem ersten, dem zweiten und/oder dem dritten Innenflächenabschnitt zumindest bereichsweise anliegt. Vorzugsweise ist ein zumindest im Wesentlichen linienförmiges Anliegen vorgesehen, um möglichst gute Abdichtung zu erreichen. Beispielsweise kann der Schieber unabhängig von seiner Drehstellung an dem zweiten und dem dritten Innenflächenabschnitt anliegen bzw. dort möglichst dauerhaft abdichten. Beispielsweise kann der Schieber in Abhängigkeit von seiner Drehstellung abschnittsweise an einem Innenflächenabschnitt anliegen bzw. abschnittsweise nicht daran anliegen, beispielsweise um an einem angrenzenden Anschluss bzw. dessen Öffnung eine fluidmechanische Interaktion hervorzurufen und/oder eine Leckage bzw. ein Mischen der Fluidströmungen hervorzurufen. Im Bereich eines Anschlusses liegt der Schieber, insbesondere dessen Stirnflanke(n), bevorzugt nur teilweise oder gar nicht an, damit eine Fluidströmung dort in die Fluidkammer gelangen kann bzw. aus der Kammer fließen kann.

Der Schieber kann einen Dichtungsabschnitt zur Abdichtung aufweisen, insbesondere der einstückig mit dem Schieber gebildet ist und/oder daran befestigt ist. Der Dichtungsabschnitt kann eine Dichtung sein oder aufweisen. Der Schieber kann den Wandungsabschnitt, insbesondere zwei oder mehr Wandungsabschnitte, und den Dichtungsabschnitt aufweisen. Es können zwei oder mehr Dichtungsabschnitt vorgesehen sein, beispielsweise zumindest ein Dichtungsabschnitt je Wandungsabschnitt. Der Wandungsabschnitt und der Dichtungsabschnitt können miteinander verklebt sein und/oder mittels 2K-Spritzguss hergestellt sein, um einstückig miteinander ausgebildet zu sein. Der Wandungsabschnitt und der Dichtungsabschnitt können ineinander eingesetzt sein, um aneinander befestigt zu sein. Beispielsweise können der Wandungsabschnitt und der Dichtungsabschnitt kraft- und/oder formschlüssig miteinander verbunden sein. Der Wandungsabschnitt kann eine höhere Zugfestigkeit und/oder Härte als der Dichtungsabschnitt aufweisen. Der Dichtungsabschnitt kann flexibel ausgebildet sein, um sich beim Anliegen an der Innenfläche zu verformen. Der Dichtungsabschnitt weist insbesondere eine oder mehrere Dichtungen und/oder Dichtlippen zum Anliegen bzw. Abdichten an der Innenfläche auf.

Es kann vorgesehen sein, dass der Schieber einen ersten Wandungsabschnitt, einen zweiten Wandungsabschnitt, und bevorzugt einen/den Lagerungsabschnitt insbesondere zwischen den zwei Wandungsabschnitten aufweist. Die zwei Wandungsabschnitte sind bevorzugt voneinander weg weisend angeordnet. Der Lagerungsabschnitt kann die Drehachse definieren und/oder mit der Drehachse zusammenfallen. Der Lagerungsabschnitt kann einen Vorsprung bzw. eine Achse aufnehmen, so dass der Schieber in der Fluidkammer um diesen Vorsprung rotieren kann. Der Lagerungsabschnitt kann alternativ oder ergänzend eine Vorsprung aufweisen, der zur Lagerung vom Gehäuse aufgenommen werden kann. Der/die Wandungsabschnitt(e), der Lagerungsabschnitt und/oder der/die Dichtungsabschnitt(e) sind vorzugsweise einstückig miteinander ausgebildet und/oder aneinander festgelegt. Der Schieber kann so langlebig und mechanisch stabil ausgebildet sein und zudem für einen geringen Strömungswiderstand in der Fluidkammer sorgen. Weiter ist es möglich, dass der Schieber unter möglichst geringem Kraftaufwand drehbar ist.

Ein Wandungsabschnitt kann eine Aufnahme für den Aktuationsmechanismus aufweisen, beispielsweise in Form einer Verstellmittelaufnahme. Die Aufnahme ist insbesondere beabstandet zum Lagerungsabschnitt bzw. zur Drehachse vorgesehen, damit durch Krafteinbringung in die Aufnahme eine Drehung des Schiebers hervorgerufen werden kann. Ein Wandungsabschnitt kann einen Abgleitbereich bereitstellen, beispielsweise zur mechanischen Interaktion mit dem Aktuationsmechanismus, insbesondere mit einem Verstellmittel bzw. einer Nocke von diesem.

Weiter kann der Schieber, insbesondere ein jeweiliger Wandungsabschnitt, eine Stirnflanke zum Anliegen bzw. Abdichten an der Innenfläche aufweisen. Der Schieber, insbesondere ein jeweiliger Wandungsabschnitt, kann mehrere Stirnflanken aufweisen. Eine Stirnflanke kann durch einen Dichtungsabschnitt und/oder durch einen Wandungsabschnitt bereitgestellt sein. Eine Stirnflanke ist insbesondere dazu eingerichtet bzw. ausgebildet, um mit einer Innenfläche und/oder einem Anschluss bzw. dessen Öffnung in fluidische Interaktion/Wechselwirkung zu treten, insbesondere um Schalten und/oder Mischen zu bewirken. Insbesondere kann eine Stirnflanke in Abhängigkeit von einer Drehstellung des Schiebers an der Innenfläche anliegen bzw. nicht anliegen und/oder an der Innenfläche abdichten bzw. nicht abdichten.

Der Schieber kann zumindest eine erste Stirnflanke aufweisen, bevorzugt die zumindest im Wesentlichen linienförmig an die Innenfläche, vorzugsweise an den ersten Innenflächenabschnitt, den zweiten Innenflächenabschnitt und/oder den dritten Innenflächenabschnitt, angrenzt bzw. daran anliegen kann. Eine erste Stirnflanke kann ein freies Ende bzw. einen Rand oder eine Kante eines Schiebers bilden. Eine erste Stirnflanke ist typischerweise zumindest Abschnittsweise langgestreckt bzw. linienförmig bzw. geradlinig verlaufend ausgebildet; optional kann sie gekrümmt und/oder geknickt verlaufend geformt sein, insbesondere korrespondierend geformt zum angrenzenden Innenflächenabschnitt. Der erste Wandungsabschnitt, der zweite Wandungsabschnitt oder beide Wandungsabschnitte bzw. jeweilige Dichtungsabschnitte können eine der zumindest einen ersten Stirnflanke bzw. eine erste Stirnflanke oder mehrere davon aufweisen. Beispielsweise kann eine erste Stirnflanke einen Rand eines Wandungsabschnitts bzw. Dichtungsabschnitts bilden. Mehrere Stirnflanken oder mehrere Abschnitte von einer ersten Stirnflanke können direkt aneinander angrenzen und/oder parallel, schräg oder rechtwinklig zueinander angeordnet sein.

Es kann vorgesehen sein, dass der Schieber zumindest eine zweite Stirnflanke aufweist. Eine zweite Stirnflanke kann zumindest im Wesentlichen flächig an die Innenfläche, beispielsweise an den ersten Innenflächenabschnitt und/oder einen anderen Innenflächenabschnitt, angrenzen bzw. daran anliegen und/oder sich zumindest im Wesentlichen in Umfangsrichtung bzw. um die Drehachse abschnittsweise herum erstrecken. Eine zweite Stirnflanke erstreckt sich typischerweise zumindest im Wesentlichen flächig, vorzugsweise räumlich. Eine zweite Stirnflanke kann eine Öffnung eines Anschlusses teilweise oder vollständig bedecken, beispielsweise in Abhängigkeit von einer Drehstellung des Schiebers. Eine zweite Stirnflanke kann durch einen Wandungsabschnitt gebildet sein und/oder ist vorzugsweise an der Innenfläche zugewandten Seite konvex ausgebildet. An einem freien Ende weist eine zweite Stirnflanke beispielsweise eine Kante auf, bevorzugt eine zumindest abschnittsweise geradlinig verlaufende Kante. Die Kante kann zumindest im Wesentlichen parallel zur Drehachse orientiert sein.

Der erste Wandungsabschnitt, der zweite Wandungsabschnitt oder beide Wandungsabschnitte bzw. jeweilige Dichtungsabschnitte können eine zweite Stirnflanke und/oder eine erste Stirnflanke oder mehrere davon aufweisen bzw. bilden. Zwei zweite Stirnflanken können zumindest im Wesentlichen gleichsinnig oder gegensinnig in Umfangsrichtung weisen. Eine oder mehrere zweite Stirnflanke(n) kann/können zur Verringerung oder Vermeidung von Rückströmungen verwendet werden. Auch ist es möglich, mittels der zweiten Stirnflanke, beispielsweise beim Kaltstart eines Fahrzeugs, einen Kreislauf bzw. einen Bypass vorübergehend geschlossen zu halten, um ein möglichst schnelles Temperieren zu erreichen.

Es kann vorgesehen sein, dass die zumindest eine zweite Stirnflanke, insbesondere deren zumindest abschnittsweise geradlinig verlaufende Kante, einen sich in Umfangsrichtung um die Drehachse erstreckenden und/oder V-förmigen Rücksprung aufweist. Beispielsweise kann die zweite Stirnflanke eine Einkerbung bzw. einen Schlitz als den Rücksprung aufweisen. Der Rücksprung ermöglicht die Einstellung eines definiert variablen Durchflussquerschnitts zwischen Fluidkammer und Anschluss in Abhängigkeit von einer Drehstellung des Schiebers. Normalerweise, d.h. z.B. bei einer geradlinigen Kante, ist der Durchflussquerschnitt primär abhängig von der Form der Öffnung des Anschlusses, die regelmäßig rund ist; nun schafft der Rücksprung weitere Gestaltungsfreiheit zur Einstellung der Funktion der Ventilvorrichtung bei Drehung des Schiebers, da hierzu die Form des Anschlusses nicht unbedingt variiert werden muss bzw. in einer fertigungsgerechten bzw. kostengünstigen Form verbleiben kann. Der Rücksprung kann ein mit Blick auf die Fluidströmung(en) möglichst ruckfreies Öffnen oder Schließen von Anschlüssen ermöglichen.

Der Rücksprung kann alternativ oder ergänzend an einer ersten Stirnflanke vorgesehen sein, beispielsweise wobei dieser Rücksprung sich in radiale Richtung und/oder quer zur Umfangsrichtung und/oder längs eines Wandungsabschnitts erstreckt; beispielsweise kann damit eine dauerhafte Leckage zwischen Fluidbereichen erreicht werden.

Es kann vorgesehen sein, dass das Gehäuse zumindest einen Anschlag zum Anschlagen des Schiebers, insbesondere der ersten und/oder zweiten Stirnflanke, aufweist, bevorzugt um eine erste Drehstellung des Schiebers zu definieren. Der Anschlag kann eine Ausgangslage des Schiebers in der Fluidkammer festlegen. Der Anschlag kann sich längs einer jeweiligen Stirnflanke erstrecken, beispielsweise um zumindest im Wesentlichen ein Abdichten zu ermöglichen. Es ist auch möglich, dass der Anschlag ausgebildet ist, so dass zwischen Anschlag und Stirnflanke eine Leckage fließen kann. Eine Leckage ist beispielsweise dazu vorgesehen, dass ein Fluidaustausch in der Fluidkammer bzw. zwischen Fluidbereichen stattfindet, beispielsweise um den Aktuationsmechanismus temperierend zu umspülen und/oder um Ablagerungen zu vermeiden. Der Anschlag kann als Radialvorsprung in der Fluidkammer ausgebildet sein. Der Anschlag liegt vorzugsweise am ersten Innenflächenabschnitt vor. Es können mehrere Anschläge vorgesehen sein, beispielsweise je Stirnflanke ein Anschlag.

Es kann vorgesehen sein, dass die zumindest zwei Anschlüsse, insbesondere in Umfangsrichtung um die Drehachse zueinander beabstandet, an die Fluidkammer angeschlossen sind. Ein Winkel zwischen zwei in Umfangsrichtung benachbarten Anschlüssen um die Drehachse kann zumindest 10 Grad und bis zu 170 Grad betragen. Der Winkel ist typischerweise von einer Mitte einer Öffnung eines Anschlusses ausgehend zu messen. Wenn Anschlüsse sich an einer runden Fluidkammer mit mittiger Drehachse gegenüberliegen, beträgt der Winkel 180 Grad. Vorteilhaft beträgt der Winkel zwischen 10 und 170 Grad, um eine kompakte Ventilvorrichtung zu erhalten. Bei mehr als zwei Anschlüssen ist ein Winkel zwischen benachbarten Anschlüssen von typischerweise zwischen 10 und 130 Grad vorgesehen. Beispielsweise beträgt der Winkel 90 ± 25 Grad.

Es kann vorgesehen sein, dass ein erster Anschluss und ein zweiter Anschluss der zumindest zwei Anschlüsse, alternativ oder optional weitere Anschlüsse, zumindest im Wesentlichen parallel zueinander und/oder voneinander weg weisend angeordnet sind. Beispielsweise können zwei der Anschlüsse in eine entgegengesetzte Richtung weisen und/oder abgewandt voneinander angeordnet sein. Damit kann ein kompaktes Anschließen in der Praxis ermöglicht werden, beispielsweise indem die Ventilvorrichtung in eine Leitung eingebunden wird, ohne die grundsätzliche Richtung der Leitung zu ändern. Das kann die Herstellkosten senken. Insbesondere kann die Entformbarkeit bei der Herstellung des Gehäuses mit den Anschlüssen mittels Spritzgussverfahren erleichtert werden, wenn mehrere Anschlüsse zumindest im Wesentlichen parallel angeordnet sind.

Es kann vorgesehen sein, dass einer der Anschlüsse zu einem anderen der Anschlüsse korrespondierend ausgebildet ist. Insbesondere entsprechend sich zwei der Anschlüsse in mechanischer Hinsicht, damit mehrere der Ventilvorrichtungen miteinander verbunden bzw. kaskadiert werden können. Beispielsweise kann ein erster Anschluss korrespondierend zu einem zweiten Anschluss ausgebildet ist, insbesondere um zwei baugleiche Ventilvorrichtungen mittels einem ersten und einem zweiten Anschluss der zwei baugleichen Ventilvorrichtungen fluidisch und mechanisch zu verbinden. Beispielsweise kann der erste Anschluss mechanisch zu dem zweiten Anschluss korrespondieren, indem er in den zweiten Anschluss einsteckbar ist.

Ventilvorrichtungen können stapelbar ausgebildet sein, insbesondere längs der Drehachse. Ein/das erste Gehäuseteil des Gehäuses kann abgewandt von der Fluidkammer mechanisch korrespondierend zu ein/dem zweiten Gehäuseteil des Gehäuses ausgebildet sein, bevorzugt um zwei baugleiche Ventilvorrichtungen mit koaxial angeordneten Drehachsen formschlüssig zu stapeln. Damit ist gemeint, dass mehrere Ventilvorrichtungen gestapelt werden können, wobei die Gehäuseteile quer zur Drehachse einen Formschluss eingehen, so dass eine stabile Stapelbarkeit erreicht wird. Beispielsweise kann das zweite Gehäuseteil außenseitig eine Außenseite des ersten Gehäuseteils zumindest bereichsweise aufnehmen, oder umgekehrt. Alternativ oder ergänzend ist es möglich, dass zwei baugleiche erste Gehäuseteile zwischeneinander zumindest eine Fluidkammer ausformen bzw. schließen können. Insbesondere kann eine Außenseite eines der zwei ersten Gehäuseteile ein zweites Gehäuseteil substituieren bzw. einen Deckel bilden. Damit kann die Anzahl der Bauteile reduziert werden.

Das Gehäuse, insbesondere das erste Gehäuseteil, kann ein oder mehrere Montageelemente aufweisen, beispielsweise eine Schraubenaufnahme und/oder einen Vorsprung zur Montage. Der Vorsprung zur Montage kann die Schraubenaufnahme aufweisen. Beispielsweise kann sich die Schraubenaufnahme längs der und/oder parallel zur Drehachse erstrecken, insbesondere um gestapelte Ventilvorrichtungen miteinander verschrauben zu können oder um Ventilvorrichtungen an einem Fahrzeug befestigen zu können.

Es kann vorgesehen sein, dass ein dritter und ein vierter Anschluss der zumindest zwei Anschlüsse zumindest im Wesentlichen gleichsinnig weisend und/oder quer zu dem ersten und/oder zweiten Anschluss angeordnet sind. Beispielsweise weisen zwei der Anschlüsse in eine gleiche Richtung, um eine kompakte Leitungsführung zu ermöglichen. Das kann die Herstellkosten und die Entformbarkeit senken.

Es kann vorgesehen sein, dass der Aktuationsmechanismus zum insbesondere stufenlosen Drehen des Schiebers eingerichtet ist, beispielsweise zum Drehen ausgehend von einer/der ersten Drehstellung in Richtung einer zweiten Drehstellung eingerichtet ist. Die zweite Drehstellung ist beispielsweise als Endstellung zu verstehen. Die Drehstellungen sind beispielsweise um einen Winkel von zumindest 5 Grad und/oder höchstens 55 Grad, vorzugsweise um einen Winkel von 30 Grad ± 15 Grad, zueinander beabstandet. Der Schieber kann zumindest zwischen der ersten und der zweiten Drehstellung gedreht werden.

Der Aktuationsmechanismus kann ein Verstellmittel aufweisen. Das Verstellmittel kann am Schieber abseits bzw. beabstandet von der Drehachse anliegen und/oder am Gehäuse gegengelagert sein. Beispielsweise kann das Verstellmittel eine Kraft auf den Schieber aufbringen, wodurch der Scheiber gedreht werden kann. Das Verstellmittel kann in die Verstellmittelaufnahme des Schiebers eingreifen und/oder am Abgleitbereich des Schiebers abgleiten. Das Verstellmittel kann weiter in bzw. an einer Verstellmittelaufnahme des Gehäuses gegengelagert sein, beispielsweise drehbar.

Das Verstellmittel kann eingerichtet sein, in Abhängigkeit von einer Drehung des Verstellmittels den Schieber zu drehen. Beispielsweise kann das Verstellmittel eine Nocke aufweisen, die bei einer Drehung den Schieber auslenkt. Das Verstellmittel bzw. die Nocke kann am Abgleitbereich des Schiebers anliegen bzw. daran abgleiten. Die Nocke kann eingerichtet sein, an einem Verstellmittelanschlag des Gehäuses anzuschlagen, insbesondere abseits vom Abgleitbereich, um die Drehstellung der Nocke referenzieren zu können.

Das Verstellmittel kann eingerichtet sein, in Abhängigkeit von einer Umgebungstemperatur und/oder Temperatur den Schieber zu drehen. Das Verstellmittel kann ein Dehnstoffelement aufweisen. Beispielsweise kann das Dehnstoffelement in der Fluidkammer angeordnet sein, um sich in Abhängigkeit von der Temperatur der Fluidströmung ausdehnen bzw. zusammenziehen zu können. Das Dehnstoffelement setzt vorteilhaft regelmäßig eine gewisse Leckage voraus, insbesondere wenn der Schieber in der ersten Drehstellung ist. Das Dehnstoffelement kann in einer Halterung des Verstellmittels gehalten sein. Die Halterung kann in bzw. an der Verstellmittelaufnahme des Gehäuses, insbesondere drehbar, aufgenommen sein. Das Dehnstoffelement kann zudem in die Verstellmittelaufnahme des Schiebers eingreifen.

Es kann vorgesehen sein, dass der Aktuationsmechanismus ein in der Fluidkammer angeordnetes Rückstellelement aufweist. Das Rückstellelement kann zum Rückstellen des Schiebers, insbesondere in Richtung von der zweiten zur ersten Drehstellung, eingerichtet sein.

Das Rückstellelement kann durch eine Feder, insbesondere Spiralfeder und/oder Schenkelfeder, gebildet sein. Das Rückstellelement kann aus einer Polymerzusammensetzung bzw. Kunststoff und/oder aus Metall bzw. metallisch ausgebildet sein. Das Rückstellelement kann einen sehr elastischen Werkstoff aufweisen, beispielsweise ein Elastomer bzw. ein Gummi. Das Rückstellelement kann zum Einwirken auf den Schieber radial beabstandet von der Drehachse angeordnet sein. Beispielsweise kann das Rückstellelement zum Einwirken auf den Schieber gegenüberliegend bzw. entgegengesetzt zum Verstellmittel angeordnet sein. Das Rückstellelement kann auf einen Vorsprung der Fluidkammer aufgesetzt sein, wobei der Vorsprung beispielsweise beabstandet von der Drehachse, und insbesondere parallel zur Drehachse, angeordnet ist. Das Rückstellelement kann zwischen einem Gegenlager des Gehäuses und dem Schieber wirken. Das Gegenlager kann ein Vorsprung des Gehäuses, beispielsweise an dem ersten Innenflächenabschnitt, sein. Das Rückstellelement kann bewirken, dass der Schieber möglichst automatisch in die erste Drehstellung zurückfährt. Damit kann das Verstellmittel, soweit vorgesehen, vereinfacht ausgebildet werden.

Es kann vorgesehen sein, dass der Aktuationsmechanismus einen außerhalb von der Fluidkammer angeordneten Stellmotor aufweist, bevorzugt der zum Drehen des Verstellmittels mit dem Verstellmittel drehfest verbunden ist. Der Stellmotor kann ein Getriebe, insbesondere ein untersetzendes Getriebe, aufweisen, um eine kontrollierbare, geringe Drehzahl und/oder Drehstellung bereitzustellen. Der Stellmotor kann einen Steuerungsbefehl bzw. Stellbefehl empfangen und umsetzen, um den Schieber zu drehen, insbesondere um den Schieber um einen bestimmten Winkel und/oder in Abhängigkeit von einer Temperatur zu drehen. Der Stellmotor kann optional ein Signal über die Stellung des Schiebers bereitstellen. Der Stellmotor kann optional das Verstellmittel hinsichtlich seiner Drehstellung referenzieren, beispielsweise gegen einen Anschlag bewegen. Das Verstellmittel bzw. ein Wellenabschnitt des Verstellmittels kann fluiddicht und drehbar durch einen Durchgang des Gehäuses geführt sein. Ein/das zweite Gehäuseteil des Gehäuses kann den Durchgang bereitstellen. Bei dem Durchgang kann es sich um eine Bohrung bzw. ein Loch im Gehäuse handeln. Beispielsweise kann der Durchgang eine Dichtungsaufnahme für eine Ringdichtung und/oder einen Wellendichtring aufweisen. So kann der Stellmotor von der typischerweise elektrisch leitfähigen Fluidströmung ferngehalten werden und dennoch zum insbesondere direkten Betätigen des Verstellmittels verwendbar sein.

Es kann vorgesehen sein, dass das Gehäuse und/oder der Schieber zumindest teilweise eine Polymerzusammensetzung bzw. Kunststoff und/oder einen Metallwerkstoff bzw. eine Metalllegierung aufweisen oder daraus gebildet sind. Beispielsweise können Kunststoffe einfach mittels Kunststoffspritzguss hergestellt werden. Metallwerkstoffe können möglichst verschleißbeständige und langlebige Ventilvorrichtungen schaffen.

Weiter wird ein Thermomanagementsystem für ein elektrifiziertes Fahrzeug vorgeschlagen. Das Fahrzeug weist typischerweise einen Antriebsstrang auf, der zumindest teilweise zum elektrischen Antreiben des Fahrzeugs ausgebildet ist. Beispielsweise kann das Fahrzeug und/oder das Thermomanagementsystem eine Fahrbatterie bzw. Batterie, einen elektrischen Antriebsmotor bzw. Fahrmotor, eine Fahrgastkabine, eine Steuerungselektronik bzw. Elektronik, eine Brennstoffzelle, einen Verbrennungsmotor und/oder dergleichen aufweisen oder damit thermisch verknüpft sein, die/der zu temperieren sein kann/können. Das Fahrzeug kann teilweise oder vollständig elektrifiziert sein. Beispielsweise ist ein Hybridfahrzeug mit einem Verbrennungsmotor und einem elektrischen Antriebsmotor im Antriebsstrang teilweise elektrifiziert. Beispielsweise ist ein Fahrzeug mit nur elektrischen Motoren bzw. elektrischen Antriebsmotoren im Antriebsstrang vollständig elektrifiziert.

Das Thermomanagementsystem kann eine/die Ventilvorrichtung, eine Wärmequelle und/oder - senke, und insbesondere eine Pumpe zum Bereitstellen einer Fluidströmung aufweisen. Die Ventilvorrichtung kann eingerichtet sein, die Wärmequelle und/oder -senke in Abhängigkeit von einer Temperatur der Fluidströmung mit der Fluidströmung zu versorgen. Es können mehrere Ventilvorrichtungen und/oder mehrere Wärmequellen und/oder -senken vorgesehen sein. Beispielsweise kann die Ventilvorrichtung in einen Ölkreislauf oder in einen Wasserkreislauf eingebunden sein, um als Fluidströmung(en) Öl bzw. Wasser zu schalten und/oder zu mischen. Die Ventilvorrichtung eignet sich beispielsweise, um in einen Batteriekreislauf und/oder einen Brennstoffzellenkreislauf des Fahrzeugs eingebunden zu werden.

Beispielsweise kann die Ventilvorrichtung mit vier Anschlüssen, insbesondere als 4-Anschlüsse-2-Wege-Ventil bzw. als 4/2-Ventil eingesetzt werden. Mit der Ventilvorrichtung kann bei einem Thermomanagementsystem ein Wärmetauscher als Wärmequelle und/oder -senke temperaturabhängig in einen Kühlkreislauf eingeschliffen bzw. eingebunden werden, insbesondere sukzessive in Abhängigkeit von der Temperatur. Alternativ oder ergänzend kann ein Fluidkreislauf bei einer zu temperierenden Fahrbatterie oder bei zu temperierender Schaltelektronik, die jeweils als Wärmequelle- und/oder -senke gelten können, für das Temperieren mittels der Ventilvorrichtung an eine andere Fluidströmung, insbesondere an eine kältere oder wärmere Fluidströmung, geschaltet bzw. gemischt werden.

Weiter wird eine Verwendung einer/der Ventilvorrichtung bei einem/dem elektrifizierten Fahrzeug vorgeschlagen, insbesondere zum Schalten und/oder Mischen von einer Fluidströmung bei dem Fahrzeug. Die Ventilvorrichtung kann Teil eines/des Thermomanagementsystems sein. Die Fluidströmung kann eine Flüssigkeit aufweisen bzw. flüssig sein.

Weiter wird ein Verfahren zum Schalten und/oder Mischen von einer insbesondere flüssigen Fluidströmung oder mehreren Fluidströmungen zwischen zumindest zwei Anschlüssen einer/der Ventilvorrichtung vorgeschlagen. Der Schieber kann in Abhängigkeit von einer Temperatur einer Fluidströmung und/oder in Abhängigkeit von einem Steuerungsbefehl bzw. Stellbefehl gedreht werden.

Im Rahmen der Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" und "oder" können stets mit "und/oder" ersetzt werden.

Nachfolgend wird die Erfindung anhand von bevorzugten Ausführungsbeispielen unter Bezugnahme auf die Zeichnungen weiter im Detail erläutert. In den Zeichnungen zeigen
Fig. 1 ein erstes Gehäuseteil einer Ventilvorrichtung in perspektivischer Ansicht,
Fig. 2A-B eine Ventilvorrichtung mit einem Dehnstoffelement in perspektivischen Ansichten, einmal dargestellt ohne zweites Gehäuseteil (2A) und einmal mit zweitem Gehäuseteil (2B),
Fig. 3A-B eine Ventilvorrichtung mit einer Nocke in perspektivischen Ansichten, einmal dargestellt ohne zweites Gehäuseteil (3A) und einmal mit zweitem Gehäuseteil (3B),
Fig. 4 ein Schieber für eine Ventilvorrichtung und mit ersten Stirnflanken in perspektivischer Ansicht,
Fig. 5 ein Schieber für eine Ventilvorrichtung und mit zweiten Stirnflanken in perspektivischer Ansicht,
Fig. 6A-B eine Ventilvorrichtung mit NW20-Anschlüssen (6A) und eine Ventilvorrichtung mit NW32-Anschlüssen (6B) in einer Draufsicht,
Fig. 7A-B eine Ventilvorrichtung mit dem Schieber aus Fig. 4 in verschiedenen Drehstellungen (7A) und eine Ventilvorrichtung mit dem Schieber aus Fig. 5 in verschiedenen Drehstellungen (7B) in einer Draufsicht,
Fig. 8A-B eine Ventilvorrichtung mit dem Schieber aus Fig. 4 in verschiedenen Drehstellungen (8A) und eine Ventilvorrichtung mit dem Schieber aus Fig. 5 in verschiedenen Drehstellungen (8B) in einer Draufsicht,
Fig. 9A-C kaskadierte Ventilvorrichtungen in perspektivischen Ansichten, und
Fig. 10A-B Schaltbilder mit einem Thermomanagementsystem eines elektrifizierten Fahrzeugs in schematischen Ansichten.

Bei in den Figuren verwendeten gleichen Bezugszeichen gilt die nachfolgende Beschreibung entsprechend für die Figuren untereinander. Beschrieben sind Beispiele, die im Rahmen der Ansprüche und der Beschreibung in verschiedenen Weisen modifiziert und/oder ergänzt werden können. Jedes Merkmal, das für ein bestimmtes Beispiel beschrieben wird, kann unabhängig oder in Kombination mit anderen Merkmalen in jedem anderen Beispiel verwendet werden. Jedes Merkmal, das für ein Beispiel einer bestimmten Anspruchskategorie beschrieben wird, kann auch in entsprechender Weise in einem Ausführungsbeispiel, beispielsweise einer anderen Anspruchskategorie bzw. einem anderen Aspekt der Erfindung, verwendet werden.

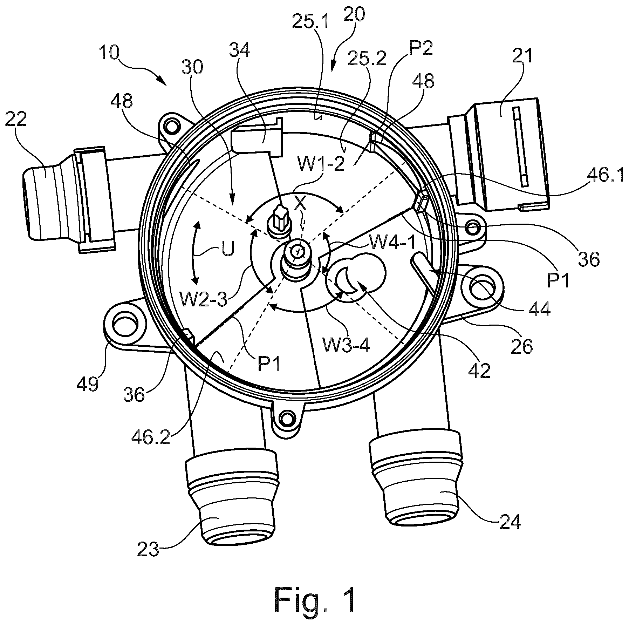

In den Fig. 1 bis 3 und Fig. 6 bis 9 ist jeweils eine Ventilvorrichtung 10 für Fluidströmungen, genauer gesagt zum Schalten und/oder Mischen von Fluidströmungen zwischen zumindest zwei, nämlich zwischen vier, Anschlüssen 21, 22, 23, 24, gezeigt. Die Ventilvorrichtung 10 weist ein Gehäuse 20 mit einer von einer Innenfläche 25 des Gehäuses 20 begrenzten Fluidkammer 30 auf, wobei die Anschlüsse 21, 22, 23, 24 an die Fluidkammer 30 angeschlossen sind. In die Fluidkammer 30 münden jeweils Öffnungen 48 der Anschlüsse 21, 22, 23, 24.

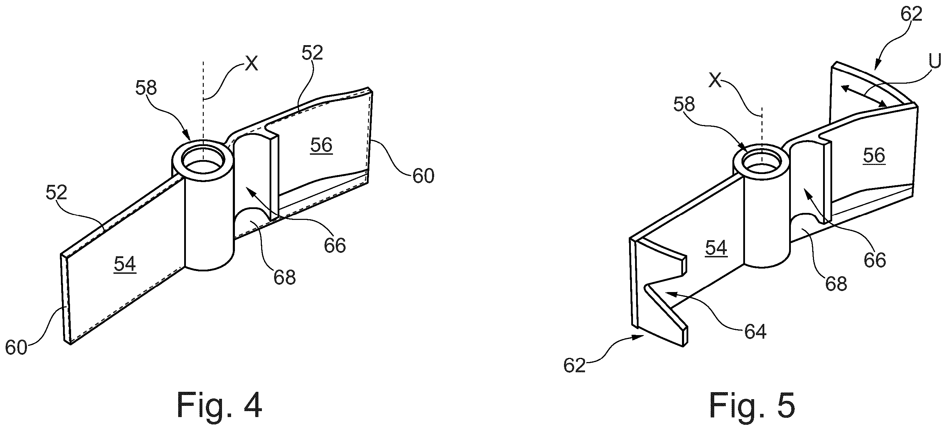

Die Ventilvorrichtung 10 weist einen in der Fluidkammer 30 drehbar um eine Drehachse X anzuordnenden Schieber 50 auf, der in Fig. 1 nicht näher dargestellt ist. Verschiedene Schieber 50 sind in Fig. 4 und Fig. 5 gezeigt.

Ein in der Fluidkammer 30 anzuordnender Schieber 50 kann sich in einer optional vorgesehenen Schieberaufnahme 46.1, 46.2 drehen, die an die Form des Schiebers 50 angepasst ist. Beispielsweise ist die Schieberaufnahme 46.1, 46.2 durch eine Vertiefung im Gehäuse 20 bereitgestellt, bevorzugt die an Rändern zumindest eine Drehstellung P1 und optional eine zweite Drehstellung P2 des Schiebers 50 definiert.

Insbesondere weist das Gehäuse 20 zwei in der Fluidkammer 30 gegenüberliegende Anschläge 36 zum Anschlagen eines Schiebers 50 auf. Die Anschläge 36 bzw. die Schieberaufnahme(n) 46.1, 46.2 definieren die erste Drehstellung P1 des Schiebers 50. Es ist möglich, dass mehr als zwei, nur einer oder kein Anschlag 36 vorgesehen ist.

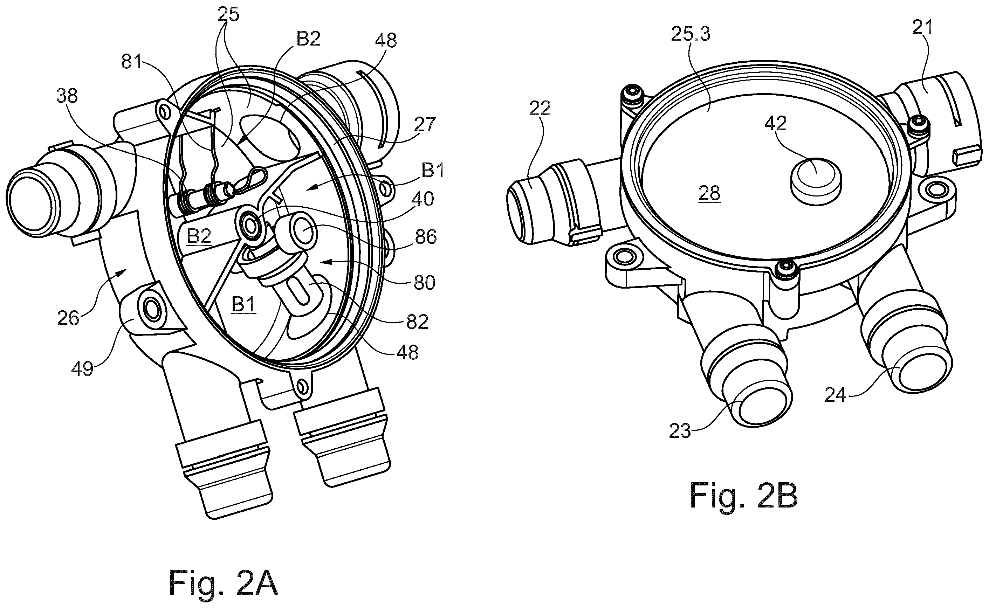

Der in der Fluidkammer 30 anzuordnende Schieber 50 teil die Fluidkammer 30 in zwei Fluidbereiche B1, B2 und liegt zur Abdichtung der zwei Fluidbereiche B1, B2 zueinander zumindest abschnittsweise an der Innenfläche 25 an, vgl. beispielsweise Fig. 2A, Fig. 3A, Fig. 7A-B oder Fig. 8A-B. Der Schieber 50 kann bei seiner Drehung um die Drehachse X zumindest bereichsweise an der Innenfläche 25 abdichtend entlang gleiten und/oder sich davon abheben (wie z.B. in der Schieberaufnahme 46.1) und mit den Öffnungen 48 in Wechselwirkung treten, um Fluidströmungen zu beeinflussen bzw. um das Schalten und/oder Mischen hervorzurufen.

Die Innenfläche 25 ist in einem ersten Innenflächenabschnitt 25.1 im Wesentlichen rund und zylindrisch um die Drehachse X geformt. Die vier Anschlüsse 21, 22, 23, 24 gehen vorliegend über ihre Öffnungen 48 vom ersten Innenflächenabschnitt 25.1 ab. Die vier Anschlüsse 21, 22, 23, 24 sind in Umfangsrichtung U um die Drehachse X zueinander beabstandet an die Fluidkammer 30 angeschlossen. Ein Winkel W1-2, W2-3, W3-4, W4-1 zwischen zwei in Umfangsrichtung U benachbarten Anschlüssen 21, 22, 23, 24 um die Drehachse X beträgt zwischen 10 Grad und 170 Grad, beispielsweise 90 Grad ± 25 Grad. Die Winkel W1-2, W2-3, W3-4, W4-1 betragen in Summe 360 Grad.

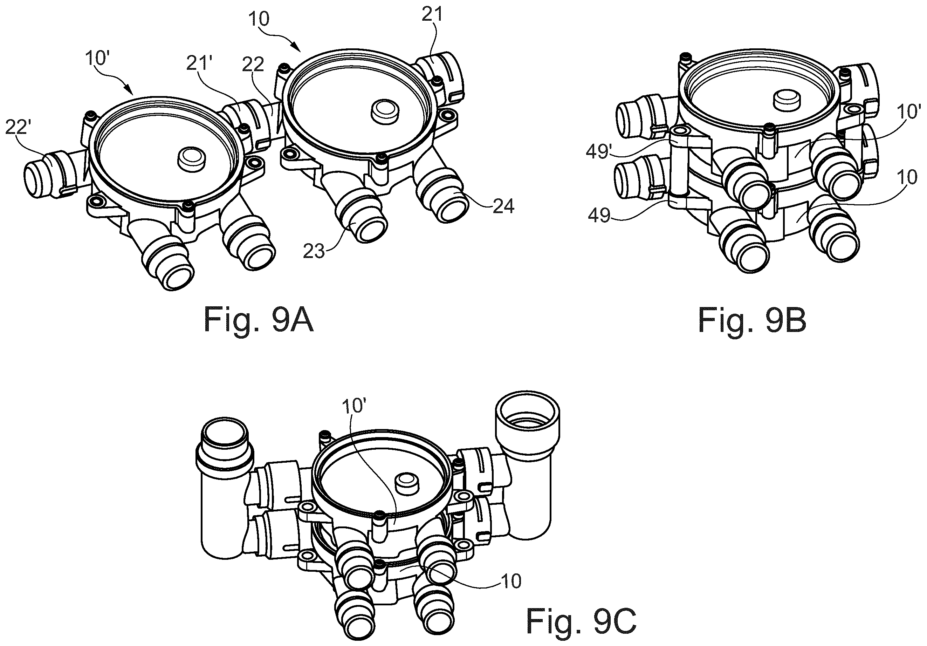

Mit Blick auf Fig. 1 und Fig. 9A-C sind ein erster 21 und ein zweiter 22 der vier Anschlüsse 21, 22, 23, 24 parallel zueinander und voneinander weg weisend angeordnet. Der erste Anschluss 21 ist korrespondierend zu dem zweiten Anschluss 22 ausgebildet, um zwei baugleiche Ventilvorrichtungen 10, 10' mittels einem ersten 21, 21' und einem zweiten 22, 22' Anschluss der zwei baugleichen Ventilvorrichtungen 10, 10' fluidisch und mechanisch zu verbinden, z.B. um eine Reihenschaltung zu erhalten, vgl. Fig. 9A. Insbesondere ist der erste Anschluss 21, 21' weiblich und der zweite Anschluss 22, 22' männlich ausgebildet. Vorliegend weist der zweite Anschluss 22 ein Verbindungsmittel auf, beispielsweise eine Klammer, um verbundene Anschlüsse 21', 22 aneinander lösbar mittels Formschluss zu fixieren. Das Verbindungsmittel greift formschlüssig in einen Rücksprung des ersten Anschlusses 21' ein, vgl. Fig. 9A. Das Verbindungsmittel kann beispielsweise beim Einstecken von Anschlüssen 21', 22 ineinander automatisch einrasten.

Ein dritter 23 und ein vierter 24 Anschluss der vier Anschlüsse 21, 22, 23, 24 sind gleichsinnig weisend und vorliegend auch quer zu dem ersten 21 und dem zweiten 22 Anschluss angeordnet. Die Anschlüsse 23 und 24 sind parallel angeordnet. Ein erstes Gehäuseteil 26 des Gehäuses 20 ist abgewandt von der Fluidkammer 30 mechanisch korrespondierend zu einem zweiten Gehäuseteil 28 des Gehäuses 20 ausgebildet, um zwei baugleiche Ventilvorrichtungen 10, 10' mit parallel und insbesondere fluchtenden bzw. koaxial angeordneten Drehachsen X formschlüssig zu stapeln, vgl. Fig. 9B-C. Mehrere, insbesondere gestapelte, Ventilvorrichtungen 10, 10' können miteinander verbunden werden, beispielsweise miteinander verschraubt werden, beispielsweise über Montageelemente 49, 49', vgl. Fig. 9B. Es ist auch möglich, mehrere bzw. gestapelte Ventilvorrichtungen 10, 10' über Anschlussstücke zu verbinden, vgl. Fig. 9C.

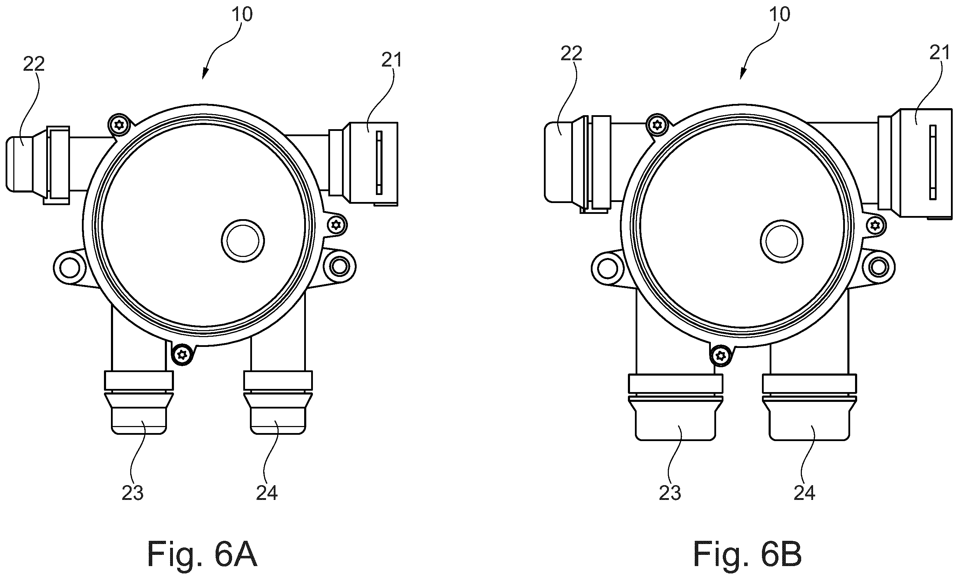

In Fig. 1 ist ein zweiter Innenflächenabschnitt 25.2 ersichtlich, der im Grunde einen Boden der Fluidkammer 30 bildet. Die Innenflächenabschnitte 25.2 und 25.3 sind durch ein erstes Gehäuseteil 26 des Gehäuses 20 bereitgestellt. Ein dritter Innenflächenabschnitt 25.3, der in Fig. 1 nicht gezeigt ist und der in Fig. 2B und in Fig. 6A-B zur verschlossenen Fluidkammer 30 bzw. zum zweiten Innenflächenabschnitt 25.2 gewandt ist, kann von einem zweiten Gehäuseteil 28 bereitgestellt sein, das mit einem ersten Gehäuseteil 26 verbindbar ist. Um die Gehäuseteile 26, 28 lösbar gegeneinander abzudichten, kann eine Dichtung 27 zwischen erstem 26 und zweitem 28 Gehäuseteil angeordnet sein, beispielsweise eine Ringdichtung. Die Dichtung 27 kann vom ersten Gehäuseteil 26 aufgenommen sein.

Das zweite Gehäuseteil 28 kann als Deckel für das erste Gehäuseteil 26 ausgebildet sein. Das zweite Gehäuseteil 28 kann mit dem ersten Gehäuseteil 26 insbesondere lösbar verbunden werden, beispielsweise, wie vorliegend, verschraubt werden.

Alternativ oder ergänzend kann der dritte Innenflächenabschnitt 25.3 durch ein weiteres erstes Gehäuseteil eines Gehäuses einer baugleichen Ventilvorrichtung bereitgestellt sein.

Die Innenflächenabschnitte 25.2 und 25.3 sind regelmäßig einander zugewandt, im Wesentlichen parallel zueinander angeordnet und können ober- bzw. unterseitig (d.h. randseitig längs der Drehachse X) an den Schieber 50 angrenzen. Weiter grenzen die Innenflächenabschnitte 25.2 und 25.3 an den ersten Innenflächenabschnitt 25.1 an, um die Fluidkammer 30 zu definieren.

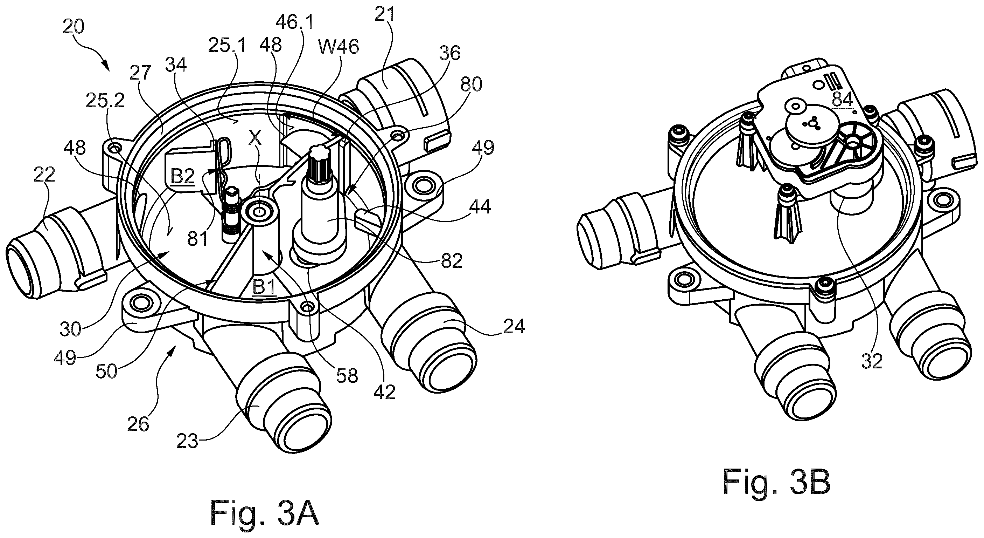

Mit Blick auf Fig. 2A-B und Fig. 3A-B ist beispielsweise ersichtlich, dass der Schieber 50 an einem ersten 25.1, einem zweiten 25.2 und, insbesondere bei aufliegendem zweiten Gehäuseteil 28, einem dritten 25.3 Innenflächenabschnitt anliegen kann, um daran abzudichten. Der Schieber 50 kann einen Dichtungsabschnitt 52 aufweisen, der einstückig mit dem Schieber 50 gebildet ist (z.B. angespritzt oder verklebt) und/oder daran befestigt ist (z.B. formschlüssig montiert). Der Schieber 50, insbesondere der Dichtungsabschnitt 52, kann bereichsweise und insbesondere in Abhängigkeit von der Drehstellung des Schiebers 50 am Gehäuse 20 bzw. an der Schieberaufnahme 46.1, 46.2 anliegen.

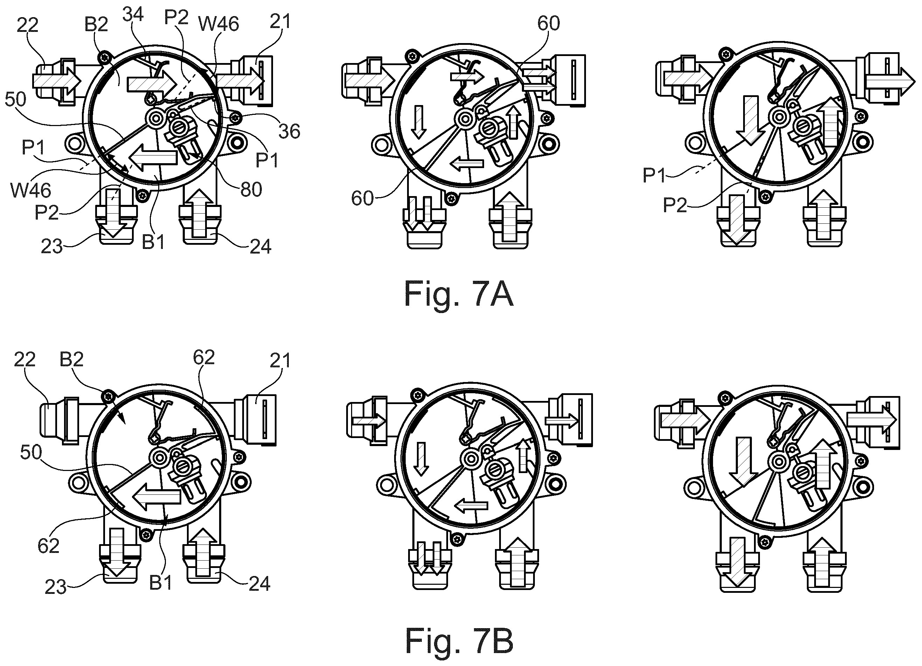

Insbesondere erstreckt sich die mit Bezugszeichen 46.1 versehene Schieberaufnahme bereichsweise über den ersten Innenflächenabschnitt 25.1, insbesondere über die Öffnung 48 des ersten Anschlusses 21 hinweg, vgl. Fig. 1 oder Fig. 7A. Die Schieberaufnahme 46.1 ist bereichsweise, insbesondere zwischen Drehstellungen P1 und P2 des Schiebers 50, radial gegenüber der Drehachse X zurückgenommen, um eine Reibung des Schiebers 50 im Bereich des ersten Anschlusses 21 zu reduzieren bzw. damit der Schieber 50 dort beabstandet zum Innenflächenabschnitt 25.1 ist. Das kann analog auch an deren Anschlüssen 22, 23, 24 vorgesehen sein, beispielsweise so am dritten Anschluss 23.

Beispielsweise erstreckt sich die mit Bezugszeichen 46.2 versehene Schieberaufnahme bereichsweise über den zweiten Innenflächenabschnitt 25.2, vgl. Fig. 1. Die Schieberaufnahme 46.2 kann auch am dritten Innenflächenabschnitt 25.3 analog, d.h. längs der Drehachse X gegenüberliegend, vorgesehen sein.

Vorzugsweise liegt der Schieber 50 in zumindest einer Drehstellung, beispielsweise in der Drehstellung P1, an einer oder beiden Schieberaufnahme(n) 46.1, 46.2 im Gehäuse 20 bzw. an der Innenfläche 25 an, um eine Abdichtung der Fluidbereiche B1, B2 zueinander zu erreichen. Der Schieber 50 kann zum Abdichten an einer oder an mehreren Abschnitten des Schiebers 50 linienförmig und/oder flächig an der Innenfläche 25 anliegen. Es ist vorliegend vorgesehen, dass der Schieber 50 sich von der Schieberaufnahme 46.1 um bis zu 2 mm abhebt, wenn er aus der ersten Drehstellung P1 ausgelenkt wird.

Mit Blick auf Fig. 4 und Fig. 5 sind Schieber 50 gezeigt, die einen ersten Wandungsabschnitt 54, einen zweiten Wandungsabschnitt 56, einen Lagerungsabschnitt 58 zwischen den zwei Wandungsabschnitten 54, 56, und ggf. einen Dichtungsabschnitt 52 aufweisen. Die Schieber 50 sind als Klappe bzw. Stellklappe ausgebildet. Die Schieber 50 sind vorliegend Spritzgussteile aus Kunststoff. In Fig. 4 ist an einem Schieber 50 der Dichtungsabschnitt 52 gestrichelt dargestellt. Der Dichtungsabschnitt 52 ist am Rand des Schiebers 50 angeordnet. Die zwei Wandungsabschnitte 54, 56 bei einem Schieber 50 weisen voneinander weg. Der Lagerungsabschnitt 58 weist eine Aufnahme für einen Vorsprung 40 des Gehäuses 20 auf. Die Aufnahme ist beispielsweise im Wesentlichen rund bzw. zylindrisch und/oder als Bohrung ausgebildet und definiert die Drehachse X bzw. fällt damit zusammen. Der Lagerungsabschnitt 58 ist kann auf den Vorsprung 40 bzw. Dom aufgesetzt werden und von diesem drehbar gelagert werden, vgl. auch Fig. 2A.

Der Schieber 50 aus Fig. 4 weist zumindest eine erste Stirnflanke 60 auf, die zumindest im Wesentlichen linienförmig an den ersten Innenflächenabschnitt 25.1 angrenzen bzw. anliegen kann. Beide Wandungsabschnitte 54, 56 weisen eine der zumindest einen ersten Stirnflanke 60 auf. Die ersten Stirnflanken 60 sind gegenüberliegend zueinander angeordnet. Die ersten Stirnflanken 60 sind weiter mittels des Dichtungsabschnitts 52 abdichtend ausgebildet. Die ersten Stirnflanken 60 verlaufen parallel zur Drehachse X.

Der Schieber aus Fig. 5 weist zwei zweite Stirnflanken 62 auf, die zumindest im Wesentlichen flächig an einer konvexen Seite an den korrespondierend konkaven ersten Innenflächenabschnitt 25.1 angrenzen können und sich in Umfangsrichtung U erstrecken. Beide Wandungsabschnitte 54, 56 weisen eine von den beiden zweiten Stirnflanken 62 auf, wobei die zwei zweiten Stirnflanken 62 insbesondere gleichsinnig in Umfangsrichtung U weisen, beispielsweise um eine Rückströmung in die Öffnungen 48 zu vermeiden und/oder um Ruckbewegungen in Fluidströmungen zu verringern. Eine zweite Stirnflanke 62 kann eine Öffnung 48 teilweise oder ganz abdecken. Die erste 60 oder die zweite 62 Stirnflanke kann an einem jeweiligen Anschlag 36 des Gehäuses 20 anschlagen und insbesondere daran abdichten. In einer angeschlagenen Drehstellung eines Schiebers 50 wird die erste Drehstellung P1 definiert, vgl. auch Fig. 2A und 3A sowie Fig. 7A und 7B links. Die erste Drehstellung P1 kann als eine Ausgangsstellung verstanden werden.

Ersichtlich weist in Fig. 5 eine der zweiten Stirnflanken 62 an ihrem freien Ende bzw. ihrer Kante einen sich in Umfangsrichtung U um die Drehachse X erstreckenden und vorliegend auch V-förmigen Rücksprung 64 auf. Dieser Rücksprung 64 dient zum gezielten Einstellen eines Durchflussquerschnitts an einer angrenzenden Öffnung 48 in Abhängigkeit von einer Drehstellung des Schiebers 50, beispielsweise um einen Durchfluss sukzessive und als Funktion von der Drehstellung des Schiebers 50 drosseln zu können. Das kann Unabhängigkeit von der Form der Öffnung 48 schaffen, die nämlich regelmäßig, meist fertigungsbedingt, rund bzw. rundlich ist 48. Die zweite Stirnflanke 60 und/oder der Rücksprung 64 dient/dienen weiter zum Kontrollieren und/oder Reduzieren eines Bypass-Durchflusses und kann/können an einen Druckverlust bzw. Durchflusswiderstand eines Wärmetauschers angepasst sein, um durch diesen einen fortwährenden Durchfluss zu erhalten. Insbesondere kann/können die zweite Stirnflanke 62 und/oder der Rücksprung 64 ein Soft-Opening bzw. Soft-Closing ermöglichen, um Druckstöße im Fluid zu reduzieren.

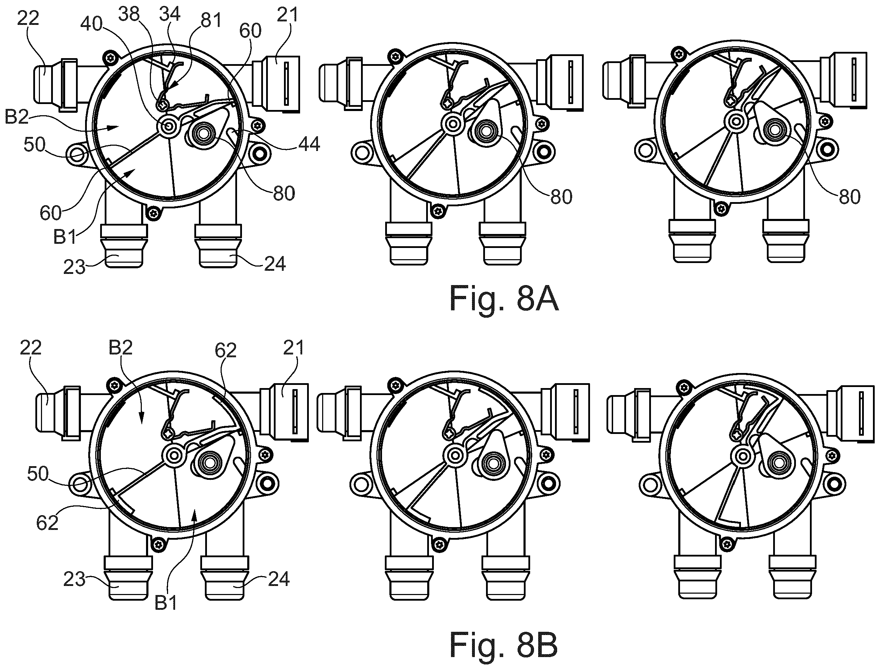

Die Ventilvorrichtung 10 weist einen zumindest teilweise in der Fluidkammer 30 angeordneten Aktuationsmechanismus 80 zum Drehen des Schiebers 50 auf, der in Fig. 1 nicht näher dargestellt ist. Aktuationsmechanismen 80, die in das in Fig. 1 gezeigte Gehäuse 20 eingebracht werden können, sind beispielsweise in Fig. 2, 3, 6, 7, 8 und 9 gezeigt. Ein Aktuationsmechanismus 80 ist vollständig in der Fluidkammer 30 angeordnet und weist ein beispielsweise wachsbasiertes Dehnstoffelement auf, vgl. Fig. 2, 6, 7 und 9. Ein anderer Aktuationsmechanismus 80 ist teilweise in der Fluidkammer 30 angeordnet und weist eine drehbare Nocke auf, vgl. Fig. 3 und 8.

Die Schieber 50 aus Fig. 4 und Fig. 5 weisen jeweils eine Verstellmittelaufnahme 66 und einen Abgleitbereich 68 auf. Die Verstellmittelaufnahme 66 ist beispielsweise ein Rücksprung, der beabstandet zur Drehachse X angeordnet ist, beispielsweise neben der Drehachse X angeordnet ist. Der Abgleitbereich 68 ist beispielsweise eine verstärkte und/oder stetig und/oder geradlinig verlaufende Flanke, die bevorzugt längs eines/des Wandungsabschnitts 56 und/oder quer bzw. senkrecht zur Drehachse X verläuft. Die Schieber 50 und insbesondere die ersten Gehäuseteile 26 können jeweils mit den verschiedenen hier beschriebenen Aktuationsmechanismen 80 verwendet werden.

Es ist auch denkbar, dass eine Ventilvorrichtung bzw. deren Schieber sowohl motorisch angetrieben sein kann als auch mittels Dehnstoffelement angetrieben sein kann (nicht detailliert dargestellt), um eine redundante Funktionsweise zu erhalten. Das kann die Ausfallsicherheit erhöhen. Außerdem kann die Funktionalität erweitert werden.

Die in Fig. 2A-B und Fig. 3A-B gezeigten zwei Aktuationsmechanismen 80 sind zum Drehen des Schiebers 50 ausgehend von der ersten Drehstellung P1 in Richtung einer zweiten Drehstellung P2 eingerichtet. Die zweite Drehstellung P2 wird vorliegend erreicht, indem der jeweilige Schieber 50 in der jeweiligen Ansicht entgegen dem Uhrzeigersinn gedreht wird, insbesondere um weniger als 90 Grad gedreht wird. Die zweite Drehstellung P2 entspricht beispielsweise der maximalen Auslenkung des Schiebers 50 weg von der ersten Drehstellung P1 durch den Aktuationsmechanismus 80. Zwischen der ersten P1 und zweiten P2 Drehstellung liegt ein Bewegungswinkel W46 des Schiebers 50 vor, der exemplarisch zumindest 1 Grad und bis zu 55 Grad, insbesondere 30 Grad ± 10 Grad, beträgt.

Ein am Schieber 50 abseits von der Drehachse X anliegendes und am Gehäuse 20 gegengelagertes Verstellmittel 82 ist zum Drehen des Schiebers 50 vorgesehen. Ein in der Fluidkammer 30 angeordnetes Rückstellelement 81 ist vorliegend zum Rückstellen des Schiebers 50 vorgesehen, und zwar in Richtung von der zweiten P2 zur ersten P1 Drehstellung. Das Rückstellelement 81 ist durch eine metallische Feder, insbesondere Schenkelfeder, gebildet. Das Rückstellelement 81 ist zum Einwirken auf den Schieber 50 radial beabstandet von der Drehachse X angeordnet. Das Rückstellelement 81 ist auf einen Vorsprung 38 bzw. Dom des Gehäuses 20 aufgesetzt. Der Vorsprung 38 verläuft parallel zur Drehachse X und ist davon radial beabstandet. Das Rückstellelement 81 ist an einem Gegenlager 34 des Gehäuses 20 gegengelagert.

Insbesondere spannen, in einer Draufsicht längs der Drehachse X, das Gegenlager 34, der Vorsprung 38 für ein/das Rückstellelement 81 und der Vorsprung 40 für einen/den Schieber 50 ein Dreieck auf, um einen vergleichsweise großen Drehwinkel für den Schieber 50 zu erhalten.

In Fig. 2A-B weist das Verstellmittel 82 ein Dehnstoffelement und einen Verstellmittelhalter 86 auf, wobei der Verstellmittelhalter 86 das Dehnstoffelement im Gehäuse schwenkbar, insbesondere parallel zur Drehachse X schwenkbar, trägt. Das Verstellmittel 82 ist eingerichtet, in Abhängigkeit von einer Temperatur, beispielsweise einer Umgebungstemperatur bzw. einer Temperatur einer Fluidströmung, den Schieber 50 zu drehen. Das Verstellmittel 82 kann sich mit steigender Temperatur ausdehnen und so auf den Schieber 50 einwirken. Vorliegend weist das Dehnstoffelement zur Öffnung 48 bzw. zu dem Anschluss 24 und es kann damit direkt angeströmt werden.

Der Verstellmittelhalter 86 kann von der Verstellmittelaufnahme 42 des Gehäuses 20, beispielsweise eine Vertiefung oder ein Vorsprung, insbesondere drehbar, aufgenommen sein.

Die Verstellmittelaufnahme 42 kann im ersten Gehäuseteil 26 und es kann eine Verstellmittelaufnahme 42 im zweiten Gehäuseteil 28 vorgesehen sein, beispielsweise um zwei gegenüberliegende Verstellmittelaufnahmen 42 zu erhalten, zwischen denen ein Verstellmittelhalter 86 formschlüssig und/oder drehbar aufgenommen werden kann, wie es beispielsweise in Fig. 2A-B der Fall ist.

Die Verstellmittelaufnahme 42 kann im ersten Gehäuseteil 26 vorgesehen sein, beispielsweise um eine Nocke formschlüssig und/oder drehbar aufzunehmen, wie es beispielsweise in Fig. 3A-B der Fall ist. Die Nocke kann weiter durch das zweite Gehäuseteil 28 ragen, z.B. um vom zweiten Gehäuseteil 28 drehbar gehalten zu sein.

Die gezeigte Verstellmittelaufnahme 42 ist sowohl für eine Nocke als auch für einen Verstellmittelhalter 86 geeignet, so dass das Gehäuse 20 passend für verschiedene Aktuationsmechanismen 80 ausgebildet ist.

In Fig. 3A-B weist das Verstellmittel 82 eine Nocke auf. Das Verstellmittel 82 ist eingerichtet, in Abhängigkeit von einer Drehung des Verstellmittels 82 den Schieber 50 zu drehen. Die Nocke kann am Abgleitbereich 68 des Schiebers 50 abgleiten, um den Schieber 50 zu drehen. Ein Verstellmittelanschlag 44 des Gehäuses 20 kann ein Referenzieren bzw. eine Kalibrierfahrt der Nocke ermöglichen.

Mit Blick auf Fig. 3B weist der Aktuationsmechanismus 80 einen außerhalb von der Fluidkammer 30 angeordneten elektrischen Stellmotor 84 auf, der zum Drehen des Verstellmittels 82 mit dem Verstellmittel 82 drehfest verbunden ist. Das Verstellmittel 82 ist fluiddicht und drehbar durch einen Durchgang 32 des Gehäuses 20 geführt. Das zweite Gehäuseteil 28 stellt den Durchgang 32 bereit. Der Stellmotor 84 ist vorliegend ferner am zweiten Gehäuseteil 28 festgelegt, beispielsweise verschraubt. Der Stellmotor 84 kann die Nocke parallel zur Drehachse X drehen bzw. betätigen.

Das Gehäuse 20 und der Schieber 50 bestehen jeweils vorzugsweise aus Kunststoff und sind bevorzugt Spritzgussteile. Denkbar ist es, eine Metalllegierung zu verwenden.

Mit Blick auf Fig. 6A-B sind zwei Ventilvorrichtungen 10 gezeigt, die verschieden große Anschlüsse 21, 22, 23, 24 aufweisen. Die Anschlüsse 21, 22, 23, 24 weisen jeweils Stutzen auf. Ein Durchflussquerschnitt eines Stutzens, mehrerer Stutzen oder insbesondere aller Stutzen bzw. Anschlüsse 21, 22, 23, 24 beträgt beispielsweise ca. 310 mm² ± 20 % (vgl. Fig. 6A) oder 575 mm² ± 20 % (vgl. Fig. 6B). Ein Stutzen, mehrere Stutzen oder insbesondere alle Stutzen weisen/weist exemplarisch eine nominale Weite von 20 mm bzw. NW20 (vgl. Fig. 6A) oder von 32 mm bzw. NW32 (vgl. Fig. 6B) oder eine andere nominale Weite auf. Beispielsweise können die Anschlüsse 21, 22, 23, 24 derart ausgebildet sein, dass die Ventilvorrichtung 10 VDA-konform ist. Beispielsweise können die in Fig. 6 gezeigten Ventilvorrichtungen 10 mit vier Anschlüssen 21, 22, 23, 24 und zwei Wegen für Fluidströmungen als "4/2 VDA NW20" (vgl. Fig. 6A) oder "4/2 VDA NW32" (vgl. Fig. 6B) bezeichnet werden, was in Fachkreisen der Automobilindustrie bzw. Fahrzeugtechnik verstanden wird.

Mit Blick auf Fig. 7A-B soll die Funktionsweise einer Ventilvorrichtung 10 mit einem Dehnstoffelement und mit dem Schieber 50 aus Fig. 4 bzw. Fig. 5 erläutert werden. Die Drehung des Schiebers 50 geschieht in Abhängigkeit von der Temperatur des z.B. in den Anschluss 24 eintretenden Fluids, das vorliegend auf das Dehnstoffelement trifft. Bei steigender oder fallender Temperatur kann das Dehnstoffelement sich verlängern und automatisch den Schieber 50 gegen den Uhrzeigersinn drehen. Bei umgekehrt fallender bzw. steigender Temperatur kann das Rückstellelement 81 den Schieber 50 in umgekehrter Richtung drehen.

In Fig. 7A-B und Fig. 8A-B sind mehrere Pfeile eingezeichnet, um Informationen über Fluidströmungen anzugeben. Eine Größe eines Pfeils deutet eine Größe eines Volumenstroms an; bei Aufteilung einer Fluidströmung wird der Volumenstrom beispielsweise bereichsweise geringer, wobei aus einem großen Pfeil zwei kleinere Pfeile in verschiedenen Bereichen werden können. Eine Richtung eines Pfeils deutet eine Richtung der Fluidströmung an. Eine Schraffur eines Pfeils deutet eine Temperatur der Fluidströmung an; beispielsweise bedeutet eine horizontale Schraffur "warm" und eine schräge Schraffur "kalt". So mögen anteilig gemischte Fluidströmungen unterschiedlicher Temperatur als zwei kleine nebeneinander dargestellte Pfeile dargestellt sein. Weiteres ergibt sich sachlogisch für den Fachmann.

In Fig. 7A ist eine Anwendung gezeigt, in der zwei, insbesondere kontinuierliche, Fluidströmungen in Abhängigkeit von der Drehstellung des Schiebers 50 gemischt werden. Zwischen den Anschlüssen 21 und 22 und zwischen den Anschlüssen 23 und 24 ist jeweils eine in den Anschluss 22 bzw. 24 eintretende Fluidströmung geführt. Beispielsweise führen die Anschlüsse 23 und 24 als ein Kreislauf - insbesondere ausschließlich - zu einer Batterie, wobei die Anschlüsse 21 und 22 eine Wärmequelle und/oder -senke mit dieser Batterie temperaturabhängig fluidisch verbinden sollen. Die zwei Fluidströmungen sind prinzipiell durch den Schieber 50, insbesondere in seiner ersten Drehstellung P1, voneinander getrennt, wobei eine Leckage zwischen zwei Fluidbereichen B1, B2 optional möglich ist. Die Fluidströmungen passieren jeweils einen der zwei Fluidbereiche B1 bzw. B2. In der ersten Drehstellung P1 kann im Kreislauf mit der Batterie bzw. über die Anschlüsse 23 und 24 eine im Grunde vollständige Rezirkulation stattfinden. Zwischen den Anschlüssen 21 und 22 findet ebenfalls nur ein Weiterleiten bzw. eine Rezirkulation des beispielsweise kühleren Fluidstroms statt; dies kann als ein Bypass verstanden werden.

Bei einer Drehung des Schiebers 50 entgegen dem Uhrzeigersinn werden die Fluidbereiche B1 und B2 relativ zu den Anschlüssen 21, 22, 23, 24 verschoben, so dass ein Schalten und/oder Mischen erreicht werden kann. In Fig. 7A mittig ist eine Drehstellung zwischen der ersten P1 und der zweiten P2 Drehstellung gezeigt, in welcher die Fluidströmungen gemischt werden, so dass die an den Anschluss 23 fluidisch angeschlossene Batterie temperaturabhängig mit einem Teil des beispielsweise kühleren Fluids vom Anschluss 22 und mit einem Teil des zu kühlenden Fluids vom Anschluss 24 versorgt wird. Aus dem Anschluss 21 tritt insoweit der jeweils übrige Teil der in die Anschlüsse 22 und 24 eingetretenen Fluidströmungen aus. Ersichtlich werden die zwei Fluidströmungen teilweise zusammengeführt bzw. gemischt, um gemischt aus den Anschlüssen 23 bzw. 21 auszutreten.

Schließlich ist in Fig. 7A rechts die zweite Drehstellung P2 gezeigt, in welcher die Fluidströmungen zwischen den jeweiligen Anschlüssen vollständig umgeschaltet worden sind; hier wird die Batterie zumindest im Wesentlichen ausschließlich mit dem kühlen Fluid versorgt, beispielsweise für eine maximale Kühlleistung.

In Fig. 7B ist eine Anwendung gezeigt, in der eine Fluidströmung geteilt bzw. geschaltet wird, insbesondere wobei ein Bypass temperaturabhängig sukzessive gedrosselt und schließlich geschlossen wird. Insbesondere ist es vorliegend so, dass zwischen den Anschlüssen 21 und 22 nur wahlweise eine Fluidströmung geführt wird, beispielsweise wobei in der ersten Drehstellung P1 kein Durchgang zwischen den Anschlüssen 21 und 22 vorliegt. In der ersten Drehstellung P1 kann eine zweite Stirnflanke 62 den Anschluss 21 bzw. die Öffnung 48 bedecken, um einen Durchfluss oder Rückfluss zu vermeiden. Beispielsweise führen die Anschlüsse 21 und 22 zu einem Wärmetauscher, der nur dann durchströmt wird, wenn die zum Anschluss 24 geführte Fluidströmung über die Drehung des Schiebers 50 geschaltet wird. Die Anschlüsse 23 und 24 können insoweit eine zu kühlende Wärmequelle mit dem Wärmetauscher temperaturabhängig verbinden. In der ersten Drehstellung P1 fließt letztlich keine Fluidströmung im Fluidbereich B1 und der in den Anschluss 24 eintretende Fluidstrom wird über den Fluidbereich B2 als Bypass direkt zurück zum Anschluss 23 geführt, vgl. Fig. 7B links.

Bei einer Drehung des Schiebers 50 entgegen dem Uhrzeigersinn werden die Fluidbereiche B1 und B2 relativ zu den Anschlüssen 21, 22, 23, 24 verschoben, um den Bypass sukzessive zu drosseln bzw. zu schließen. In Fig. 7B mittig ist eine Drehstellung zwischen P1 und P2 gezeigt, wobei der Wärmetauscher der in Anschluss 24 eintretenden Fluidströmung zumindest teilweise zugeschaltet ist, und wobei ein Teil der in Anschluss 24 eintretende Fluidströmung am Anschluss 23 etwas gedrosselt und mithin teilweise direkt zum Anschluss 23 zurückgeführt wird. Ein anderer Teil der in Anschluss 24 eintretenden Fluidströmung kann aus dem Anschluss 21 austreten, so dass am Anschluss 22 in den ersten Fluidbereich B1 ein Eintritt einer entsprechenden Fluidströmung erhalten werden kann. Dabei ist es so, dass die Strömungsgeschwindigkeit bzw. der Volumenstrom an Fluid durch den Wärmetauscher in Abhängigkeit von der Drehstellung des Schiebers 50 eingestellt werden kann, beispielsweise um unnötige Reibungsverluste zu vermeiden oder um einen Ruck zu kontrollieren. Weiter verhindern die zweiten Flanken 62, dass das in den vierten Anschluss 24 eintretende Fluid am Anschluss 21 direkt zum ersten Fluidbereich B1 gelangt bzw. auf kurzem Weg ungewollt rückströmt. Weiter wird der dritte Anschluss 23 seitens des zweiten Fluidbereichs dank einer zweiten Flanke 62 mit Drehung in Richtung der zweiten Drehstellung P2 zunehmend verschlossen.

Schließlich ist in Fig. 7B rechts die zweite Drehstellung P2 gezeigt, in welcher der Bypass geschlossen ist und ausschließlich der am Anschluss 21 angeschlossene Wärmetauscher ausgehend vom Anschluss 24 mit Fluid versorgt wird.

Mit Blick auf Fig. 8A-B kann die Funktionsweise einer Ventilvorrichtung 10 mit einer Nocke und mit dem Schieber 50 aus Fig. 4 bzw. Fig. 5 verstanden werden. Die Drehung des Schiebers 50 geschieht mittels der Drehung der Nocke als Teil des Verstellmittels 82. Die Nocke kann über den hier nicht gezeigten Stellmotor 84 gedreht werden. Im Uhrzeigersinn drehend kann die Nocke am Verstellmittelanschlag 44 anschlagen, beispielsweise zum Referenzieren. Gegen den Uhrzeigersinn drehend kann die Nocke den Schieber 50 daran abgleitend auslenken. Der Schieber 50 wird über das Rückstellelement 81 in entgegengesetzter Richtung kraftbeaufschlagt, so dass beim Drehen des Schiebers 50 im Uhrzeigersinn auch sichergestellt ist, dass der Schieber 50 folgt.

Fig. 8A-B ist/sind prinzipiell analog zu Fig. 7A-B zu beschreiben, so dass zur Vermeidung von Wiederholungen auf diese Ausführungen verwiesen wird. Davon abweichend ist es so, dass die Drehung des Schiebers 50 bzw. die temperaturabhängige Regelung der Drehstellung in Fig. 8A-B nicht durch ein Dehnstoffelement, sondern durch eine mittels Stellmotor 84 angetriebene Nocke erfolgt. Der Stellmotor 84 kann eingerichtet sein, in Abhängigkeit von einer Temperatur einer Fluidströmung und/oder in Abhängigkeit von einem Steuerungsbefehl, den Schieber 50 zu drehen.

Mit Blick auf Fig. 9A-C sind kaskadierte Ventilvorrichtungen 10 gezeigt. Mehrere Ventilvorrichtungen 10, 10' können redundant oder sich ergänzend eingesetzt werden. Beispielsweise können Ventilvorrichtungen 10, 10' zum Schalten und/oder Mischen von mehr als zwei Fluidströmungen in Reihe geschaltet werden, vgl. Fig. 9A. Beispielsweise können Ventilvorrichtungen 10, 10' über Montageelemente 49 formschlüssig miteinander verbunden werden, vgl. Fig. 9B. Beispielsweise können Ventilvorrichtungen 10, 10' zum Erhöhen von Durchflussmengen parallel geschaltet werden, vgl. Fig. 9C.

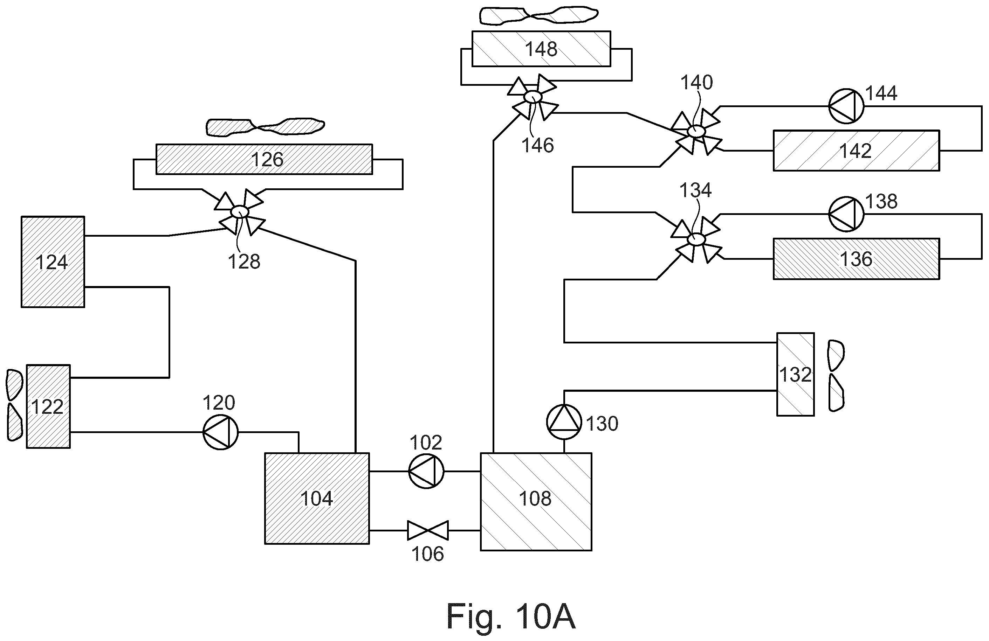

Mit Blick auf Fig. 10A-B ist jeweils ein Thermomanagementsystem eines elektrifizierten Fahrzeugs als schematisches Schaltbild gezeigt. Bei dem Fahrzeug kann es sich um ein batterieelektrisches und/oder hybrides Fahrzeug handeln. Eine Batterie 136 ist zum Speichern von elektrischer Energie vorgesehen, die zum Vortrieb bzw. Antrieb des Fahrzeugs nutzbar ist. Die Batterie 136 weist beispielsweise eine Energiekapazität von mindestens 1 kWh auf, vorzugsweise mindestens 10 kWh. Eine Elektronik 142 ist zum Regeln eines Ladevorgangs bzw. Entladevorgangs der Batterie 136 und/oder zum Ansteuern eines von der Batterie 136 gespeisten elektrischen Antriebsmotors des Fahrzeugs vorgesehen. Das Fahrzeug weist eine nicht näher gezeigte Fahrgastkabine auf, die über eine Heizung 122 beheizt werden kann. Pumpen 120, 130, 138, 144 können Fluidströmungen zwischen den Komponenten des jeweiligen Thermomanagementsystems zirkulieren lassen. Fluidströmungen bzw. Fluide können Wärme transportieren und weisen typischerweise eine Flüssigkeit auf oder bestehen daraus. Wässrige, ölhaltige und/oder kältemittelhaltige Flüssigkeiten können als Fluide vorgesehen sein.

An verschiedenen Wärmetauschern 122, 126, 132 und/oder 148 in des Thermomanagementsystems (vgl. Fig. 10A-B) kann Wärme an die Umgebungsluft insbesondere mittels abgeführt werden. Insbesondere handelt es sich bei dem/den Wärmetauscher(n) 122, 126, 132 und/oder 148 um Wasser/Luft-Wärmetauscher. Es ist jeweils schematisch ein Propeller bzw. Lüfter dargestellt, um anzudeuten, dass Konvektion der Umgebungsluft erzwungen werden kann.

Das Thermomanagementsystem weist jeweils eine Heiß-Seite (links in Fig. 10A-B) und eine Kalt-Seite (rechts in Fig. 10A-B) auf. Die Heiß-Seite und die Kalt-Seite verbindet ein Wärmepumpenkreislauf. Der Wärmepumpenkreislauf weist vorliegend einen Kompressor 102, einen Kondensator 104, ein Expansionsventil 106 und einen Wärmetauscher 108 auf. In dem Wärmepumpenkreislauf ist ein Kältemittel geführt, das einen gasförmigen und/oder einen flüssigen Zustand einnehmen kann. Der Wärmetauscher 108 kann Wärme zwischen dem Kältemittel und einem insbesondere flüssigen Fluid bzw. zwischen den Fluidströmungen tauschen. Der Wärmetauscher 108 arbeitet im Zusammenspiel mit dem Kompressor 102 und dem Expansionsventil 106. Der Kompressor 102 verdichtet ein Kältemittel, wodurch es sich erwärmt. Nachdem das Kältemittel durch den Kondensator 104 abgekühlt wurde, gelangt es in das Expansionsventil 106, wo es sich schnell entspannt und dabei stark abkühlt. Dieser Kühlprozess wird dann verwendet, um die Temperatur von Flüssigkeiten im Wärmetauscher 108 zu senken.

Die Heiß-Seite in Fig. 10A ist an den Kondensator 104 angeschlossen, um dessen vom komprimierten Kältemittel stammende Wärme zu nutzen und ggf. abzuführen. Die Heiß-Seite weist eine Pumpe 120 auf, die die Heizung 122 für die Fahrgastkabine, einen Öl/Wasser-Wärmetauscher 124, eine Ventilvorrichtung 128 und optional einen Niedertemperatur-Wärmetauscher 126 mit ggf. heißem Fluid versorgt. Das Fluid ist vorzugsweise flüssig und weist beispielsweise einen wässrigen bzw. wasserbasierten Wärmeträger auf. Die Ventilvorrichtung 128 ist eingerichtet, den Wärmetauscher 126 temperaturabhängig zu versorgen, um eine Temperatur der z.B. zum Kondensator 104 zurückgeführten Fluidströmung einzustellen. Beispielsweise kann bei zu hoher Temperatur der Wärmetauscher 126 teilweise oder vollständig eingeschliffen werden bzw. der Fluidstrom in diesen geschaltet werden. Der Wärmetauscher 126 kann dann die Wärme des Fluids beispielsweise an die Umgebungsluft abführen.

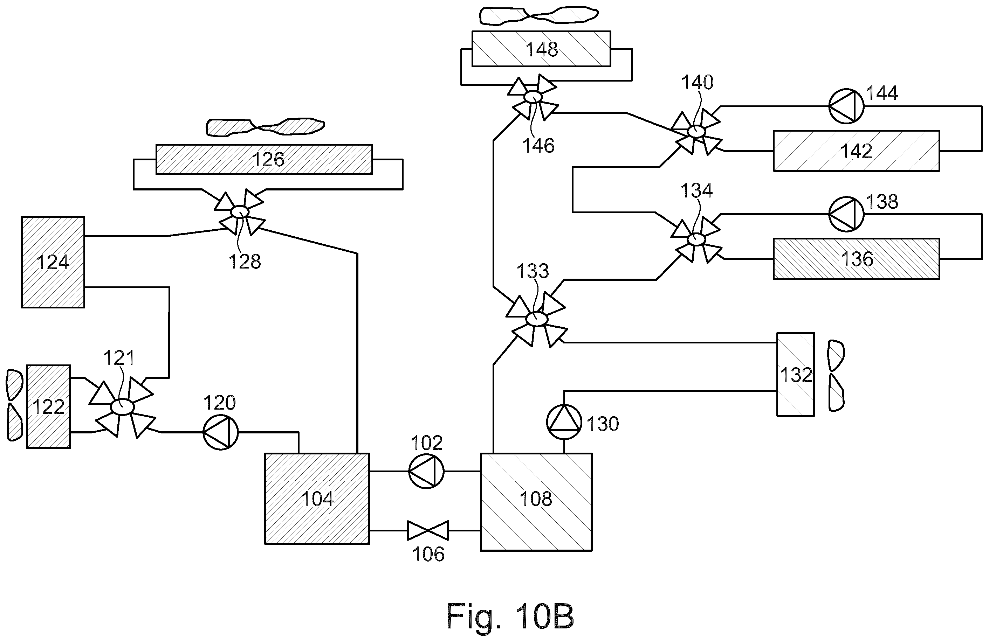

Im Thermomanagementsystem in Fig. 10B ist in Abwandlung von Fig. 10A an der Heiß-Seite eine weitere Ventilvorrichtung 121 implementiert, und zwar um die Heizung 122 nur optional, beispielsweise gar nicht, teilweise oder vollständig, mit der vom Kondensator 104 kommenden warmen Fluidströmung zu versorgen. Die Ventilvorrichtung 121 kann einen Bypass, insbesondere zur Heizung 122, bereitstellen, beispielsweise um die Temperatur des zum Wärmetauscher 124 und/oder zum Wärmetauscher 126 und/oder zum Kondensator 104 fließenden Fluids zu beeinflussen.

Die Ventilvorrichtung 121 bzw. 128 (vgl. Fig. 10A-B) kann beispielsweise diejenige aus Fig. 7B oder Fig. 8B sein, wobei die Heizung 122 bzw. der Wärmetauscher 126 an die Anschlüsse 21, 22 angeschlossen sein kann. Ein Aktuationsmechanismus der jeweiligen Ventilvorrichtung 121 bzw. 126 kann einen Stellmotor und/oder ein Dehnstoffelement aufweisen.

Die Kalt-Seite in Fig. 10A ist an den Wärmetauscher 108 angeschlossen, um dessen vom expandierten Kältemittel stammende reduzierte Temperatur bzw. reduzierte Wärme zum Temperieren zu nutzen und ggf. abzuführen. Die Kalt-Seite weist eine Pumpe 130 auf, die prinzipiell einen Wärmetauscher 132, Ventilvorrichtungen 134, 140 und 146 und optional eine Batterie 136, eine Elektronik 142 und einen Niedertemperatur-Wärmetauscher 148 versorgt. Die Ventilvorrichtungen 134, 140 und 146 sind jeweils eingerichtet, temperaturabhängig zu schalten bzw. zu mischen. Beispielsweise sind die Batterie 136 und die Elektronik 142 jeweils über eigene Pumpen 138 bzw. 144 einer kontinuierlichen Fluidströmung ausgesetzt, der nur wahlweise über die Ventilvorrichtungen 134 bzw. 140 der kühlere Fluidstrom vom Wärmetauscher 108 beigemischt wird oder damit ersetzt wird. Die Ventilvorrichtung 146 ist eingerichtet, den Wärmetauscher 148 temperaturabhängig und/oder geschaltet durch einen Steuerungsbefehl zu versorgen, um eine Temperatur der, z.B. zum Wärmetauscher 108 zurückgeführten, Fluidströmung einzustellen. Beispielsweise kann bei relativ zur Umgebungsluft erhöhter Temperatur des Fluidstroms der Wärmetauscher 148 teilweise oder vollständig eingeschliffen werden bzw. der Fluidstrom in diesen geschaltet werden. Der Wärmetauscher 148 kann die Wärme des Fluids der Umgebungsluft zuführen bzw. das Fluid abkühlen, wenn es je nach Einsatzzweck notwendig oder sinnvoll ist.

Im Thermomanagementsystem in Fig. 10B ist in Abwandlung von Fig. 10A an der Kalt-Seite eine weitere Ventilvorrichtung 133 implementiert, und zwar um den dem Wärmetauscher 132 nachgeschalteten Kreislauf, vorliegend einschließlich Batterie 136, Elektronik 142 und Wärmetauscher 148, nur optional, beispielsweise gar nicht, teilweise oder vollständig, mit der vom Wärmetauscher 108 kommenden kalten Fluidströmung zu versorgen und/oder diesen ohne den Wärmetauscher 108 des Wärmepumpenkreislaufs bzw. den Wärmetauscher 132 zu betreiben. Die Ventilvorrichtung 133 kann einen Bypass vor dem Wärmetauscher 108 bzw. nach dem Wärmetauscher 132 bereitstellen, beispielsweise falls gerade keine Kühlung von Batterie 136 und/oder Elektronik 142 notwendig ist oder falls die Temperatur des Fluidstroms vom Wärmetauscher 108 möglichst schnell weiter gesenkt werden muss.

Die Ventilvorrichtung 133 (vgl. Fig. 10B) ermöglicht es, einen Bypass abseits vom Wärmetauscher 108 bzw. Wärmepumpenkreislauf zu erzeugen. Beispielsweise ist das vorgesehen, wenn das Fahrzeug im Stillstand befindlich ist, die Batterie 142 geladen wird und die Elektronik 136 und/oder Batterie 142 Abwärme erzeugt bzw. temperiert werden muss. Insbesondere kann der Wärmepumpenkreislauf außer Betrieb gehalten werden. Insoweit kann unter Zuhilfenahme des Wärmetauschers 148 und ggf. der Ventilvorrichtung 146 ein Temperieren von Elektronik 136 und/oder Batterie 142 erfolgen, insbesondere ohne, dass der Wärmetauscher 108 beim Temperieren unterstützt.

Beispielsweise kann die Ventilvorrichtung 133 (vgl. Fig. 10B) einen Bypass beim Kaltstart bereitstellen, exemplarisch damit die Batterie 136 und/oder die Elektronik 142 sich schnell eigenständig aufheizen können. Der Bypass kann dann sukzessive geschlossen werden, um die Batterie 136 und/oder die Elektronik 142 durch eine fluidische Anbindung an den Wärmetauscher 108 zu temperieren.

Die Ventilvorrichtung 146 (vgl. Fig. 10A-B) kann beispielsweise diejenige aus Fig. 7B oder Fig. 8B sein, wobei die der Wärmetauscher 148 an die Anschlüsse 21 und 22 angeschlossen sein kann. Ein Aktuationsmechanismus der Ventilvorrichtung 146 kann einen Stellmotor und/oder ein Dehnstoffelement aufweisen. Insbesondere kann die Ventilvorrichtung 146, beispielsweise mittels des Stellmotors, durch einen Steuerbefehl geschaltet werden, beispielsweise falls die von der Elektronik 136 und/oder Batterie 142 kommende Fluidströmung mittels des Wärmetauschers 148 abgekühlt werden soll.

Die Ventilvorrichtung 134 bzw. 140 (vgl. Fig. 10A-B) kann beispielsweise diejenige aus Fig. 7A oder Fig. 8A sein, wobei die Batterie 136 bzw. die Elektronik 142 an die Anschlüsse 21 und 22 oder auch die Anschlüsse 23 und 24 der jeweiligen Ventilvorrichtung 134 bzw. 140 angeschlossen sein kann.

Die hier beschriebenen Ventilvorrichtungen 10, 121, 128, 133, 134, 140, 146 können als Mischventil zur Versorgung unterschiedlicher Temperaturniveaus (vgl. z.B. Fig. 7A oder Fig. 8A) und/oder als Strömungsteiler zur Aufteilung zwischen Heizkörperstrom und Bypass (vgl. z.B. Fig. 7B oder Fig. 8B) verwendet werden.

Die beschriebenen Thermomanagementsysteme der in Fig. 10A-B weisen Ventilvorrichtungen 121, 128, 133, 134, 140, 146, Wärmequellen bzw. Wärmesenken und Pumpen zum Bereitstellen von Fluidströmungen auf. Der Kondensator 104, die Wärmetauscher 108, 124, 126, 132, 148, die Batterie 136, die Elektronik 142, der Wärmepumpenkreislauf und/oder die Heizung 122 können als Wärmequelle und/oder Wärmesenke eingerichtet sein bzw. so betrachtet werden, da sie Wärme abgeben können/müssen oder Wärme aufnehmen können/müssen, beispielsweise um eine ordnungsgemäße Funktion des Thermomanagementsystems zu gewährleisten oder um externe Anforderungen zu erfüllen, beispielsweise eine Heizung der Fahrgastkabine, ein Temperieren der Batterie 136 oder Anderes.

Die Ventilvorrichtungen 121, 128, 133, 134, 140, 146 sind zumindest teilweise eingerichtet, eine daran angebundene Wärmequelle bzw. Wärmesenke in Abhängigkeit von einer Temperatur der Fluidströmung mit der Fluidströmung zu versorgen. Es ist auch möglich, die Versorgung in Abhängigkeit von Steuerungsbefehlen bzw. externen Anforderungen umzusetzen.

Die beschriebenen Thermomanagementsysteme stellt eine Verwendung von den Ventilvorrichtungen 121, 128, 133, 134, 140, 146 zum Schalten und/oder Mischen von einer flüssigen Fluidströmung bzw. mehreren Fluidströmungen bei einem elektrifizierten Fahrzeug dar.

Offenbart ist ein Verfahren zum Schalten und/oder Mischen von Fluidströmungen zwischen zumindest zwei Anschlüssen 21, 22, 23, 24 der Ventilvorrichtung 10, wobei der Schieber 50 der Ventilvorrichtung 50 in Abhängigkeit von einer Temperatur einer insbesondere durch die Ventilvorrichtung 10 fließenden Fluidströmung und/oder in Abhängigkeit von einem Steuerungsbefehl gedreht wird.

### Bezugszeichenliste

- 10: Ventilvorrichtung

- 20: Gehäuse
- 21: Anschluss
- 22: Anschluss
- 23: Anschluss
- 24: Anschluss
- 25: Innenfläche
- 25.1: erster Innenflächenabschnitt
- 25.2: zweiter Innenflächenabschnitt
- 25.3: dritter Innenflächenabschnitt
- 26: erstes Gehäuseteil
- 27: Dichtung
- 28: zweites Gehäuseteil
- 30: Fluidkammer
- 32: Durchgang
- 34: Gegenlager
- 36: Anschlag
- 38: Vorsprung
- 40: Vorsprung
- 42: Verstellmittelaufnahme
- 44: Verstellmittelanschlag
- 46.1: Schieberaufnahme
- 46.2: Schieberaufnahme
- 48: Öffnung
- 49: Montageelement

- 50: Schieber
- 52: Dichtungsabschnitt
- 54: erster Wandungsabschnitt
- 56: zweiter Wandungsabschnitt
- 58: Lagerungsabschnitt
- 60: erste Stirnflanke
- 62: zweite Stirnflanke
- 64: Rücksprung
- 66: Verstellmittelaufnahme
- 68: Abgleitbereich

- 80: Aktuationsmechanismus
- 81: Rückstellelement
- 82: Verstellmittel
- 84: Stellmotor
- 86: Verstellmittelhalter

- 102: Kompressor
- 104: Kondensator
- 106: Expansionsventil
- 108: Wärmetauscher

- 120: Pumpe (Heiß-Seite)
- 121: Ventilvorrichtung
- 122: Heizung
- 124: Wärmetauscher (ÖI/Wasser-Wärmetauscher)
- 126: Wärmetauscher (Niedertemperatur)
- 128: Ventilvorrichtung

- 130: Pumpe (Kalt-Seite)
- 132: Wärmetauscher
- 133: Ventilvorrichtung
- 134: Ventilvorrichtung
- 136: Batterie
- 138: Pumpe
- 140: Ventilvorrichtung
- 142: Elektronik
- 144: Pumpe
- 146: Ventilvorrichtung
- 148: Wärmetauscher (Niedertemperatur)

- B1: erster Fluidbereich
- B2: zweiter Fluidbereich
- P1: erste Drehstellung
- P2: zweite Drehstellung
- U: Umfangsrichtung
- W1-2: Winkel zwischen Anschluss 21 und 22
- W2-3: Winkel zwischen Anschluss 22 und 23
- W3-4: Winkel zwischen Anschluss 23 und 24
- W4-1: Winkel zwischen Anschluss 24 und 21
- W46: Bewegungswinkel des Schiebers
- X: Drehachse

## Patentansprüche

1. Ventilvorrichtung (10) für eine Fluidströmung, aufweisend
ein Gehäuse (20) mit einer von einer Innenfläche (25) des Gehäuses (20) begrenzten Fluidkammer (30) und mit an die Fluidkammer (30) angeschlossenen zumindest zwei Anschlüssen (21, 22, 23, 24),
einen in der Fluidkammer (30) drehbar um eine Drehachse (X) angeordneten Schieber (50), der die Fluidkammer (30) in zumindest zwei Fluidbereiche (B1, B2) teilt, und
einen zumindest teilweise in der Fluidkammer (30) angeordneten Aktuationsmechanismus (80) zum Drehen des Schiebers (50),
**dadurch gekennzeichnet, dass** der Schieber (50) zur Abdichtung der Fluidbereiche (B1, B2) zueinander zumindest abschnittsweise an der Innenfläche (25) anliegt.

2. Ventilvorrichtung (10) nach dem voranstehenden Anspruch,
wobei die Innenfläche (25) in einem ersten Innenflächenabschnitt (25.1) im Wesentlichen rund und/oder zylindrisch um die Drehachse (X) geformt ist und die zumindest zwei Anschlüsse (21, 22, 23, 24) vom ersten Innenflächenabschnitt (25.1) abgehen,
bevorzugt wobei die Innenfläche (25) einen zweiten (25.2) und einen dritten (25.3) Innenflächenabschnitt aufweist, die einander zugewandt sind und an die der Schieber (50) und der erste Innenflächenabschnitt (25.1) angrenzt, und
wobei der erste (25.1) und der zweite (25.2) Innenflächenabschnitt durch ein erstes Gehäuseteil (26) des Gehäuses (20) und bevorzugt der dritte Innenflächenabschnitt (25.3) durch ein zweites Gehäuseteil (28) des Gehäuses (20) bereitgestellt sind.

3. Ventilvorrichtung (10) nach dem voranstehenden Anspruch,
wobei der Schieber (50) an dem ersten (25.1), dem zweiten (25.2) und dem dritten (25.3) Innenflächenabschnitt anliegt,
wobei der Schieber (50) einen Dichtungsabschnitt (52) zur Abdichtung aufweist, der einstückig mit dem Schieber (50) gebildet ist und/oder daran befestigt ist, und
bevorzugt wobei das Gehäuse (20) und der Schieber (50) jeweils zumindest eine Polymerzusammensetzung und/oder einen Metallwerkstoff aufweisen oder daraus gebildet sind.

4. Ventilvorrichtung (10) nach einem der voranstehenden Ansprüche,
wobei der Schieber (50) einen ersten Wandungsabschnitt (54), einen zweiten Wandungsabschnitt (56), und einen Lagerungsabschnitt (58) zwischen den zwei Wandungsabschnitten (54, 56) aufweist,
wobei die zwei Wandungsabschnitte (54, 56) voneinander weg weisend angeordnet sind, und
wobei der Lagerungsabschnitt (58) die Drehachse (X) definiert und/oder mit der Drehachse (X) zusammenfällt.

5. Ventilvorrichtung (10) nach einem der voranstehenden drei Ansprüche,
wobei der Schieber (50) zumindest eine erste Stirnflanke (60) aufweist, die zumindest im Wesentlichen linienförmig an den ersten Innenflächenabschnitt (25.1) angrenzt, und
bevorzugt wobei der erste Wandungsabschnitt (54) oder beide Wandungsabschnitte (54, 56) eine der zumindest einen ersten Stirnflanke (60) aufweisen.

6. Ventilvorrichtung (10) nach einem der voranstehenden vier Ansprüche,
wobei der Schieber (50) zumindest eine zweite Stirnflanke (62) aufweist, die zumindest im Wesentlichen flächig an den ersten Innenflächenabschnitt (25.1) angrenzt und sich zumindest im Wesentlichen in Umfangsrichtung (U) erstreckt, insbesondere wobei die zumindest eine zweite Stirnflanke (62) einen sich in Umfangsrichtung (U) um die Drehachse (X) erstreckenden, insbesondere V-förmigen, Rücksprung (64) aufweist,
bevorzugt wobei der erste Wandungsabschnitt (54) oder beide Wandungsabschnitte (54, 56) eine der zumindest einen zweiten Stirnflanke (62) aufweisen und insbesondere die zwei zweiten Stirnflanken (62) gleichsinnig in Umfangsrichtung (U) weisen.

7. Ventilvorrichtung (10) nach einem der voranstehenden Ansprüche,
wobei das Gehäuse (20) zumindest einen Anschlag (36) zum Anschlagen des Schiebers (50), insbesondere der ersten (60) und/oder zweiten (62) Stirnflanke, aufweist, um eine erste Drehstellung (P1) des Schiebers (50) zu definieren.

8. Ventilvorrichtung (10) nach einem der voranstehenden Ansprüche,
wobei die zumindest zwei Anschlüsse (21, 22, 23, 24) in Umfangsrichtung (U) um die Drehachse (X) zueinander beabstandet an die Fluidkammer (30) angeschlossen sind,
wobei ein Winkel (W1-2, W2-3, W3-4, W4-1) zwischen zwei in Umfangsrichtung (U) benachbarten Anschlüssen (21, 22, 23, 24) um die Drehachse (X) zumindest 10 Grad und bis zu 170 Grad beträgt,
bevorzugt wobei ein erster (21) und ein zweiter (22) der zumindest zwei Anschlüsse (21, 22, 23, 24) zumindest im Wesentlichen parallel zueinander und voneinander weg weisend angeordnet sind, und
bevorzugt wobei ein dritter (23) und ein vierter (24) Anschluss der zumindest zwei Anschlüsse (21, 22, 23, 24) zumindest im Wesentlichen gleichsinnig weisend und/oder quer zu dem ersten (21) und/oder zweiten (22) Anschluss angeordnet sind.

9. Ventilvorrichtung (10) nach einem der voranstehenden Ansprüche,
wobei der erste Anschluss (21) korrespondierend zu dem zweiten Anschluss (22) ausgebildet ist, um zwei baugleiche Ventilvorrichtungen (10, 10') mittels einem ersten (21, 21') und einem zweiten (22, 22') Anschluss der zwei baugleichen Ventilvorrichtungen (10, 10') fluidisch und mechanisch zu verbinden, und/oder
wobei ein/das erste Gehäuseteil (26) des Gehäuses (20) abgewandt von der Fluidkammer (30) mechanisch korrespondierend zu einem/dem zweiten Gehäuseteil (28) des Gehäuses (20) ausgebildet ist, um zwei baugleiche Ventilvorrichtungen (10) mit koaxial angeordneten Drehachsen (X) formschlüssig zu stapeln, und/oder
wobei der dritte Innenflächenabschnitt (25.3) durch ein erstes Gehäuseteil (26') eines Gehäuses (20') einer baugleichen Ventilvorrichtung (10') bereitstellbar ist.

10. Ventilvorrichtung (10) nach einem der voranstehenden Ansprüche,
wobei der Aktuationsmechanismus (80) zum Drehen des Schiebers (50) ausgehend von einer/der ersten Drehstellung (P1) in Richtung einer zweiten Drehstellung (P2) eingerichtet ist und ein am Schieber (50) abseits von der Drehachse (X) anliegendes und am Gehäuse (20) gegengelagertes Verstellmittel (82) aufweist, und wobei
das Verstellmittel (82) eingerichtet ist, in Abhängigkeit von einer Drehung des Verstellmittels (82) den Schieber (50) zu drehen, oder
das Verstellmittel (82) eingerichtet ist, in Abhängigkeit von einer Temperatur den Schieber (50) zu drehen und insbesondere ein Dehnstoffelement aufweist.

11. Ventilvorrichtung (10) nach dem voranstehenden Anspruch,
wobei der Aktuationsmechanismus (80) ein in der Fluidkammer (30) angeordnetes Rückstellelement (81) aufweist, das zum Rückstellen des Schiebers (50) in Richtung von der zweiten (P2) zur ersten (P1) Drehstellung eingerichtet ist und insbesondere durch eine metallische Feder gebildet ist,
bevorzugt wobei das Rückstellelement (81) zum Einwirken auf den Schieber (50) radial beabstandet von der Drehachse (X) angeordnet ist.

12. Ventilvorrichtung (10) nach einem der voranstehenden zwei Ansprüche,
wobei der Aktuationsmechanismus (80) einen außerhalb von der Fluidkammer (30) angeordneten Stellmotor (84) aufweist, der zum Drehen des Verstellmittels (82) mit dem Verstellmittel (82) drehfest verbunden ist, und
wobei das Verstellmittel (82) fluiddicht und drehbar durch einen Durchgang (32) des Gehäuses (20) geführt ist, und
bevorzugt wobei ein/das zweite Gehäuseteil (28) des Gehäuses (20) den Durchgang (32) bereitstellt.

13. Thermomanagementsystem für ein elektrifiziertes Fahrzeug, aufweisend eine Ventilvorrichtung (10) nach einem der voranstehenden Ansprüche, eine Wärmequelle und/oder - senke, und eine Pumpe zum Bereitstellen einer Fluidströmung, wobei die Ventilvorrichtung (10) eingerichtet ist, die Wärmequelle und/oder -senke in Abhängigkeit von einer Temperatur der Fluidströmung mit der Fluidströmung zu versorgen.

14. Verwendung einer Ventilvorrichtung (10) nach einem der Ansprüche 1 bis 12 zum Schalten und/oder Mischen von einer Fluidströmung bei einem elektrifizierten Fahrzeug, wobei die Fluidströmung flüssig ist.

15. Verfahren zum Schalten und/oder Mischen von einer Fluidströmung zwischen zumindest zwei Anschlüssen (21, 22, 23, 24) einer Ventilvorrichtung (10) nach einem der Ansprüche 1 bis 12,
wobei der Schieber (50) in Abhängigkeit von einer Temperatur einer Fluidströmung gedreht wird und die Fluidströmung flüssig ist.
